# EUROPEAN PATENT APPLICATION

(11) **EP 4 800 386 A1**
(43) Date of publication of application: **02.09.2026**
(21) Application number: 24882132.4
(22) Date of filing: 04.10.2024
(51) Int. Cl.: G01N 29/024

(54) **PHYSICAL QUANTITY MEASUREMENT SYSTEM**

(30) Priority: 24.10.2023 JP 2023182796
(71) Applicant: Panasonic Intellectual Property Management Co., Ltd., Kadoma-shi, Osaka 571-0057 (JP)
(72) Inventor: TAKAKURA, Yuya, Kadoma-shi, Osaka 571-0057 (JP); MATSUDA, Masataka, Kadoma-shi, Osaka 571-0057 (JP); SATOU, Masato, Kadoma-shi, Osaka 571-0057 (JP)
(74) Representative: SSM Sandmair
(86) International application number: PCT/JP2024/035653
(87) International publication number: WO 2025/089015

(57) **Abstract**

The problem to be overcome by the present disclosure is to measure the concentration of a gas included in gas mixtures by a different measuring method from a known measuring method. A physical quantity measurement system (1) includes a flow channel, a pair of ultrasonic transducers (11, 12), a temperature sensor (13), a first acquirer (203), a second acquirer (204), a third acquirer (205), and a concentration measurer (206). The first acquirer (203) acquires a measured propagation time according to a reference temperature. The second acquirer (204) acquires a first reference propagation time of the ultrasonic wave in a situation where at least a first gas is flowing through the flow channel, and a second gas is not flowing through the flow channel. The third acquirer (205) acquires a second reference propagation time of the ultrasonic wave in a situation where at least the second gas is flowing through the flow channel, and the first gas is not flowing through the flow channel. The concentration measurer (206) measures a concentration of the first gas using the measured propagation time, the first reference propagation time, and the second reference propagation time.

## Description

### Technical Field

The present disclosure generally relates to a physical quantity measurement system, and more particularly relates to a physical quantity measurement system, of which the target of measurement is gas mixtures flowing through a flow channel.

### Background Art

In the fields in which fuel cells are used such as fuel cell vehicles (FCVs), the flow rate and concentration of hydrogen need to be measured in a hydrogen-mixed gas with high humidity.

A method using an ultrasonic wave has been known in the art as a method for measuring the concentration of a mixed gas including hydrogen (see, for example, Patent Literature 1).

A device disclosed in Patent Literature 1 obtains, first, a speed of sound in a mixed gas based on the measured value of the propagation time of an ultrasonic wave. Next, the device obtains the average molecular weight of the mixed gas using the speed of sound and a measured temperature. Thereafter, the device obtains the concentration of hydrogen, which is one of a plurality of component gases, using respective molecular weights of the plurality of component gases that are already known.

### Citation List

### Patent Literature

Patent Literature 1: JP 2010-91489 A

### Summary of Invention

In recent years, there has been a growing demand for a measuring method different from a known measuring method for obtaining the concentration of hydrogen (as a gas concentration) included in a mixed gas (gas mixtures).

In view of the foregoing background, it is therefore an object of the present disclosure to provide a physical quantity measurement system having the ability to measure the concentration of a gas included in gas mixtures by a different method from a known measuring method.

A physical quantity measurement system according to an aspect of the present disclosure includes a flow channel, a pair of ultrasonic transducers, a temperature sensor, a first acquirer, a second acquirer, a third acquirer, and a concentration measurer. The flow channel allows gas mixtures including a first gas and a second gas to flow therethrough. The pair of ultrasonic transducers transmit and receive an ultrasonic wave and are arranged to cause the ultrasonic wave to cross a flow of the gas mixtures along the flow channel. The temperature sensor measures the temperature of the gas mixtures. The first acquirer acquires a measured propagation time according to a reference temperature based on an ultrasonic wave propagation time obtained by causing the pair of ultrasonic transducers to transmit and receive the ultrasonic wave, the temperature measured by the temperature sensor, and the reference temperature. The second acquirer acquires a first reference propagation time of the ultrasonic wave in a situation where at least the first gas is flowing through the flow channel, and the second gas is not flowing through the flow channel. The third acquirer acquires a second reference propagation time of the ultrasonic wave in a situation where at least the second gas is flowing through the flow channel, and the first gas is not flowing through the flow channel. The concentration measurer measures a concentration of the first gas using the measured propagation time, the first reference propagation time, and the second reference propagation time.

### Brief Description of Drawings

[FIG. 1] FIG. 1 is a block diagram illustrating a configuration for a physical quantity measurement system according to a first embodiment;
[FIG. 2] FIG. 2 is a system diagram illustrating a configuration for the physical quantity measurement system;
[FIG. 3] FIG. 3 is a cross-sectional view, taken along an X-Y plane, of a flow channel body included in the physical quantity measurement system;
[FIG. 4] FIG. 4 is a flowchart showing how the physical quantity measurement system operates;
[FIG. 5] FIG. 5 is a block diagram illustrating a configuration for a physical quantity measurement system according to a second embodiment;
[FIG. 6] FIG. 6 is a cross-sectional view, taken along an X-Y plane, of a flow channel body included in the physical quantity measurement system;
[FIG. 7] FIG. 7 is a flowchart showing how the physical quantity measurement system operates; and
[FIG. 8] FIG. 8 is a block diagram illustrating a configuration for a physical quantity measurement system according to a third embodiment.

### Description of Embodiments

Note that the embodiment and its variations to be described below are only an exemplary one of various embodiments of the present disclosure and its variations and should not be construed as limiting the scope of the present disclosure. Rather, the exemplary embodiment and its variations may be readily modified in various manners depending on a design choice or any other factor without departing from a true spirit and scope of the present disclosure.

### (First embodiment)

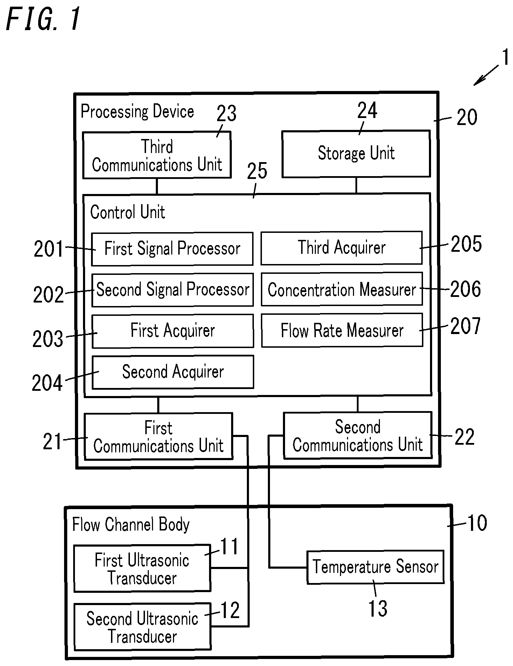

A physical quantity measurement system 1 according to a first embodiment will be described with reference to FIGS. 1-4.

### (1) Overview

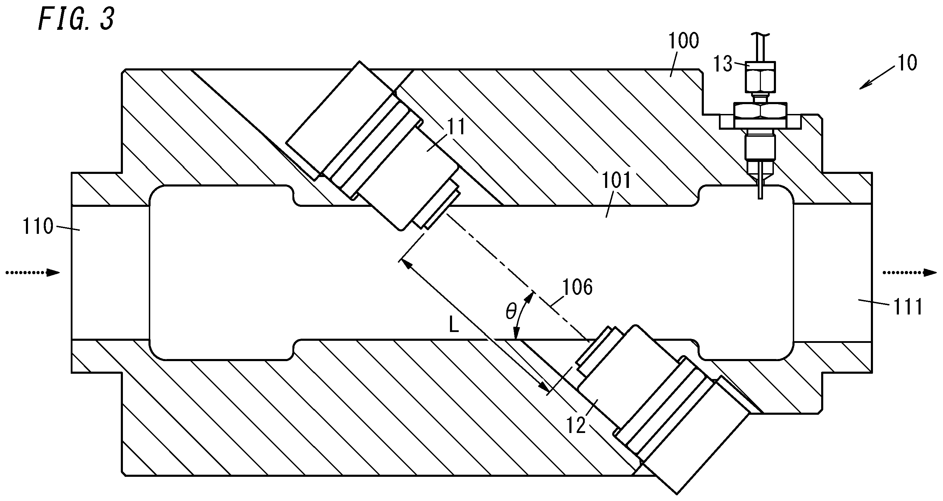

A physical quantity measurement system 1 according to this embodiment is a system for measuring, in gas mixtures including multiple types of gases flowing through a flow channel 101 (refer to FIG. 3), at least the concentration of a specific gas (such as hydrogen) out of the concentration of the specific gas and a flow rate of the gas mixtures.

A physical quantity measurement system 1 according to this embodiment includes a flow channel 101, a pair of ultrasonic transducers 11, 12, a temperature sensor 13, a first acquirer 203, a second acquirer 204, a third acquirer 205, and a concentration measurer 206 as shown in FIGS. 1 and 3. The flow channel 101 allows gas mixtures including a first gas and a second gas to flow therethrough. The pair of ultrasonic transducers 11, 12 transmit and receive an ultrasonic wave and are arranged to cause the ultrasonic wave to cross the flow of the gas mixtures along the flow channel 101. The temperature sensor 13 measures the temperature of the gas mixtures. The first acquirer 203 acquires a measured propagation time according to a reference temperature based on an ultrasonic wave propagation time obtained by causing the pair of ultrasonic transducers 11, 12 to transmit and receive the ultrasonic wave, the temperature measured by the temperature sensor 13, and the reference temperature. The second acquirer 204 acquires a first reference propagation time of the ultrasonic wave in a situation where at least the first gas is flowing through the flow channel 101 and the second gas is not flowing through the flow channel 101. The third acquirer 205 acquires a second reference propagation time of the ultrasonic wave in a situation where at least the second gas is flowing through the flow channel 101 and the first gas is not flowing through the flow channel 101. The concentration measurer 206 measures the concentration of the first gas using the measured propagation time, the first reference propagation time, and the second reference propagation time.

According to this configuration, the concentration of the first gas is measured using the measured propagation time, the first reference propagation time, and the second reference propagation time, thus allowing the concentration of the gas included in the gas mixtures to be measured by a different measuring method from the known measuring method.

### (2) Configuration

A configuration for the physical quantity measurement system 1 will now be described in detail with reference to FIGS. 1-3.

The physical quantity measurement system 1 includes a flow channel body 10 and a processing device 20 as shown in FIG. 1. The physical quantity measurement system 1 measures, as physical quantities, the concentration of a first gas (such as hydrogen) included in gas mixtures flowing through the flow channel body 10 and the flow rate of the gas mixtures. In this case, the concentration measured by the physical quantity measurement system 1 may be, for example, a volume concentration.

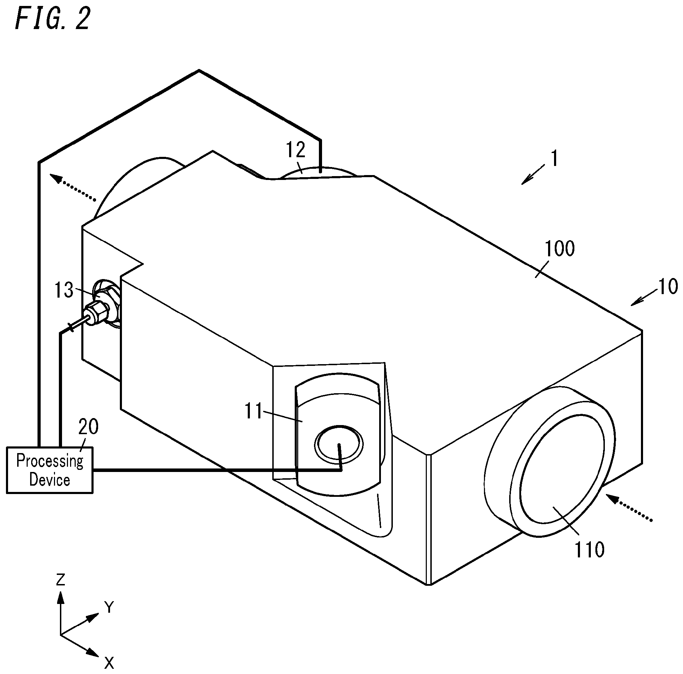

X-, Y-, and Z-axes are herein defined with respect to the flow channel body 10 (refer to FIG. 2). Specifically, the X-axis is herein defined to be an axis along the longitudinal axis of the flow channel body 10, i.e., an axis defined along a direction in which the gas mixtures flow. The Y-axis is an axis that intersects at right angles with the X-axis, and may be, for example, an axis defined along the depth of the flow channel body 10. The Z-axis is an axis that intersects at right angles with both the X- and Y-axes and may be, for example, an axis defined along the height of the flow channel body 10. FIG. 3 is a cross-sectional view, taken along an X-Y plane, of the flow channel body 10. Note that none of the cross sections of the pair of ultrasonic transducers 11, 12 and the temperature sensor 13 are shown in FIG. 3.

### (2.1) Flow channel body

The gas mixtures flow through the flow channel body 10. The flow channel body 10 includes a pair of ultrasonic transducers 11, 12 and a temperature sensor 13 as shown in FIG. 1. The flow channel body 10 further includes a body 100 as shown in FIG. 2. Note that in the following description, when the ultrasonic transducer 11 is referred to as a "first ultrasonic transducer 11," the ultrasonic transducer 12 will be hereinafter sometimes referred to as a "second ultrasonic transducer 12."

The body 100 is formed in a substantially rectangular parallelepiped shape. A flow channel 101, through which a fluid under measurement (gas mixtures) such as a mixed gas including the first gas and the second gas flows, is provided to run through the middle of the body 100 (refer to FIG. 3). A first opening 110 and a second opening 111 are respectively provided at both longitudinal ends of the body 100. Specifically, the first opening 110 and the second opening 111 are respectively provided through both side surfaces, facing each other along the longitudinal axis, of the body 100. The first opening 110 and the second opening 111 are connected to each other via the flow channel 101. The gas mixtures flow in through the first opening 110, pass through the flow channel 101, and flow out through the second opening 111. The gas mixtures include the first gas and the second gas as described above. Both the first gas and the second gas have the same molecular structure (such as single-atom molecule or a two-atom molecule). In this embodiment, both the first gas and the second gas are two-atom molecules. For example, the first gas may be hydrogen, and the second gas may be nitrogen.

The pair of ultrasonic transducers 11, 12 transmit and receive an ultrasonic wave. The pair of ultrasonic transducers 11, 12 are arranged to cause the ultrasonic wave to cross the flow of the gas mixtures along the flow channel 101. Specifically, the first ultrasonic transducer 11 transmits the ultrasonic wave toward the second ultrasonic transducer 12. In addition, the first ultrasonic transducer 11 also receives the ultrasonic wave transmitted from the second ultrasonic transducer 12. In the same way, the second ultrasonic transducer 12 transmits the ultrasonic wave toward the first ultrasonic transducer 11. In addition, the second ultrasonic transducer 12 also receives the ultrasonic wave transmitted from the first ultrasonic transducer 11. The first ultrasonic transducer 11 and the second ultrasonic transducer 12 are respectively arranged at both lateral ends of the flow channel 101 and at upstream and downstream ends to cause an ultrasonic signal to cross the flow of the gas mixtures. The first ultrasonic transducer 11 and the second ultrasonic transducer 12 are also respectively arranged on both side surfaces, facing each other along the lateral axis, of the flow channel 101 and at upstream and downstream ends to cause the ultrasonic signal to cross the flow of the gas mixtures. Specifically, the first ultrasonic transducer 11 and the second ultrasonic transducer 12 are arranged at upstream and downstream ends, respectively, to face each other (refer to FIGS. 2 and 3). In the direction in which the first ultrasonic transducer 11 and the second ultrasonic transducer 12 face each other, an ultrasonic wave propagation path 106 for propagating the ultrasonic wave therethrough is formed (refer to FIG. 3). The ultrasonic wave propagation path 106 forms a tilt angle θ with respect to the flow channel 101 (refer to FIG. 3).

The temperature sensor 13 may be a thermocouple, for example. The temperature sensor 13 is arranged on the flow channel 101 to measure the temperature of the gas mixtures flowing through the flow channel 101.

### (2.2) Processing device

The processing device 20 includes a first communications unit 21, a second communications unit 22, a third communications unit 23, a storage unit 24, and a control unit 25 as shown in FIG. 1.

The processing device 20 includes a computer system including one or more processors and a memory, for example. The computer system performs the functions of the control unit 25 by making the processor execute a program stored in the memory. In this embodiment, the program to be executed by the processor is stored in advance in the memory of the computer system. Alternatively, the program may also be distributed after having been stored in a non-transitory storage medium such as a memory card or downloaded via a telecommunications line such as the Internet.

The first communications unit 21 is a communications interface for communicating with the first ultrasonic transducer 11 and the second ultrasonic transducer 12. The second communications unit 22 is a communications interface for communicating with the temperature sensor 13. The third communications unit 23 is a communications interface for communicating with, for example, a user device (not shown). The user device is a device which includes a display unit such as a liquid crystal display to notify the user of, for example, the result of measurement made by the physical quantity measurement system 1.

The storage unit 24 may be implemented as a device selected from the group consisting of, for example, a read-only memory (ROM), a random-access memory (RAM), and an electrically erasable programmable read-only memory (EEPROM). The storage unit 24 stores information for use to measure a physical quantity.

The control unit 25 includes a first signal processor 201, a second signal processor 202, the first acquirer 203, the second acquirer 204, the third acquirer 205, the concentration measurer 206, and a flow rate measurer 207 as shown in FIG. 1.

The first signal processor 201 performs processing concerning communications to be established between the first ultrasonic transducer 11 and the second ultrasonic transducer 12.

For example, when an ultrasonic wave is going to be transmitted from the first ultrasonic transducer 11 to the second ultrasonic transducer 12, the first signal processor 201 outputs a signal, instructing the first ultrasonic transducer 11 to transmit the ultrasonic wave, to the first ultrasonic transducer 11 via the first communications unit 21. When an ultrasonic wave is going to be transmitted from the second ultrasonic transducer 12 to the first ultrasonic transducer 11, the first signal processor 201 outputs a signal, instructing the second ultrasonic transducer 12 to transmit the ultrasonic wave, to the second ultrasonic transducer 12 via the first communications unit 21.

In addition, the first signal processor 201 also measures a propagation time tᵤₚ (hereinafter referred to as a "first-direction propagation time tᵤₚ") of the ultrasonic wave transmitted from the first ultrasonic transducer 11 to the second ultrasonic transducer 12. Specifically, the first signal processor 201 measures the first-direction propagation time tᵤₚ based on a time when the ultrasonic wave was transmitted from the first ultrasonic transducer 11 and a time when the ultrasonic wave transmitted from the first ultrasonic transducer 11 is received at the second ultrasonic transducer 12.

Furthermore, the first signal processor 201 further measures a propagation time t_{dw} (hereinafter referred to as a "second-direction propagation time t_{dw}") of the ultrasonic wave transmitted from the second ultrasonic transducer 12 to the first ultrasonic transducer 11. Specifically, the first signal processor 201 measures the second-direction propagation time t_{dw} based on a time when the ultrasonic wave was transmitted from the second ultrasonic transducer 12 and a time when the ultrasonic wave transmitted from the second ultrasonic transducer 12 is received at the first ultrasonic transducer 11. The first signal processor 201 calculates, as an ultrasonic wave propagation time tₐ, the average value of the first-direction propagation time tᵤₚ and the second-direction propagation time t_{dw}.

The second signal processor 202 receives the output signal of the temperature sensor 13 and subjects the signal thus received to predetermined processing. For example, on receiving the output signal of the temperature sensor 13, the second signal processor 202 subjects the signal thus received to predetermined signal processing to obtain a temperature Tₐ measured by the temperature sensor 13. In this case, the second signal processor 202 obtains the temperature Tₐ at the timing when the propagation time tₐ was calculated (i.e., when the propagation time tₐ was calculated). That is to say, the temperature Tₐ is a temperature measured when the propagation time tₐ was calculated.

The first acquirer 203 acquires, based on the ultrasonic wave propagation time tₐ calculated by the first signal processor 201, the temperature Tₐ measured by the temperature sensor 13, and the reference temperature T₀, a measured propagation time tₓ converted into a propagation time according to the reference temperature T₀. The first acquirer 203 may convert the propagation time tₐ into a measured propagation time tₓ as a propagation time in a situation where the reference temperature T₀ is 20°C by, for example, replacing the reference temperature T₀ and "T" with 20°C and "Tₐ," respectively, in the following Mathematical Expression 1: ${t}_{x}^{2} = {t}_{a}^{2} \times \frac{273.15 + T}{273.15 + {T}_{0}} .$

The second acquirer 204 acquires an ultrasonic wave propagation time t₁ (hereinafter referred to as a "first reference propagation time t₁" in the following description of the first embodiment) in a situation where at least the first gas is flowing through the flow channel 101 and the second gas is not flowing through the flow channel 101.

In the first embodiment, the second acquirer 204 acquires, from a predetermined storage area, the first reference propagation time t₁ that has been calculated in advance in a situation where the first gas is flowing through the flow channel 101 and the second gas is not flowing through the flow channel 101. For example, the storage unit 24 stores, as a piece of information for use to measure the physical quantity, the first reference propagation time t₁ that has been calculated in advance in the situation where the first gas is flowing through the flow channel 101 and the second gas is not flowing through the flow channel 101. The second acquirer 204 acquires the first reference propagation time t₁ from the storage unit 24. In this case, the first reference propagation time t₁ is a value calculated based on information about the first gas, a gas constant R, a gap distance L between the pair of ultrasonic transducers 11, 12, and the reference temperature T₀. In the first embodiment, the information about the first gas includes a first molecular weight M₁ of the first gas and a specific heat ratio of the first gas. The information about the first gas includes, as the specific heat ratio of the first gas, a first molar specific heat cₚ₁ at constant pressure of the first gas and a first molar specific heat cᵥ₁ at constant volume of the first gas.

More specifically, the first reference propagation time t₁ is calculated by the following Mathematical Expression 2 using the first molecular weight M₁, the first molar specific heat cₚ₁ at constant pressure, the first molar specific heat cᵥ₁ at constant volume, the gas constant R, the reference temperature T₀, and the gap distance L (refer to FIG. 3) between the pair of ultrasonic transducers 11, 12.${c}^{2} = \frac{{L}^{2}}{{t}^{2}} = \frac{γRT}{M}$

In Mathematical Expression 2, "c" is a speed of sound, "t" is the ultrasonic wave propagation time, and "γ" is a specific heat ratio and satisfies the relational expression: "γ = cₚ/cᵥ" where "cₚ" is a molar specific heat at constant pressure and "cᵥ" is a molar specific heat at constant volume. Also, in Mathematical Expression 2, "M" is a molecular weight. The first reference propagation time t₁ is calculated by replacing "γ," "M," and "T" in Mathematical Expression 2 with "cₚ₁/cᵥ₁," "M₁," and "T₀," respectively, using the relational expressions on the middle and right sides of the Mathematical Expression 2 and thereby solving Mathematical Expression 2 with respect to "t."

The third acquirer 205 acquires an ultrasonic wave propagation time t₂ (hereinafter referred to as a "second reference propagation time t₂" in the following description of the first embodiment) in a situation where at least the second gas is flowing through the flow channel 101 and the first gas is not flowing through the flow channel 101. In the first embodiment, the third acquirer 205 acquires, from a predetermined storage area, the second reference propagation time t₂ that has been calculated in advance in a situation where the second gas is flowing through the flow channel 101 and the first gas is not flowing through the flow channel 101. For example, the storage unit 24 stores, as a piece of information for use to measure the physical quantity, the second reference propagation time t₂ that has been calculated in advance in the situation where the second gas is flowing through the flow channel 101 and the first gas is not flowing through the flow channel 101. The third acquirer 205 acquires the second reference propagation time t₂ from the storage unit 24. In this case, the second reference propagation time t₂ is a value calculated based on information about the second gas, the gas constant R, the gap distance L between the pair of ultrasonic transducers 11, 12, and the reference temperature T₀. In the first embodiment, the information about the second gas includes a second molecular weight M₂ of the second gas and a specific heat ratio of the second gas. The information about the second gas includes, as the specific heat ratio of the second gas, a second molar specific heat cₚ₂ at constant pressure of the second gas and a second molar specific heat cᵥ₂ at constant volume of the second gas.

More specifically, the second reference propagation time t₂ is calculated by the Mathematical Expression 2 using the second molecular weight M₂, the second molar specific heat cₚ₂ at constant pressure, the second molar specific heat cᵥ₂ at constant volume, the gas constant R, the reference temperature T₀, and the gap distance L between the pair of ultrasonic transducers 11, 12. The second reference propagation time t₂ is calculated by replacing "γ," "M," and "T" in Mathematical Expression 2 with "cₚ₂/cᵥ₂," "M₂," and "T₀," respectively, using the relational expressions on the middle and right sides of the Mathematical Expression 2 and thereby solving Mathematical Expression 2 with respect to "t."

The concentration measurer 206 measures the concentration x of the first gas using the measured propagation time tₓ, the first reference propagation time t₁, and the second reference propagation time t₂. In this case, the following Mathematical Expression 3 is derived from the Mathematical Expression 2:
$\frac{{t}_{2}^{2} - {t}_{x}^{2}}{{t}_{2}^{2} - {t}_{1}^{2}} = \frac{\frac{{M}_{2}}{{γ}_{2} RT} - \frac{{M}_{x}}{{γ}_{x} RT}}{\frac{{M}_{2}}{{γ}_{2} RT} - \frac{{M}_{1}}{{γ}_{1} RT}} .$

In Mathematical Expression 3, "γ₁" is a specific heat ratio of the first gas, "γ₂" is a specific heat ratio of the second gas, "Mₓ" is a molecular weight of the gas mixtures, "γₓ" is a specific heat ratio of the gas mixtures, and "T" is a temperature. The specific heat ratios of gases having similar molecular structures are approximately equal to each other. In the first embodiment, the first gas is hydrogen, the second gas is nitrogen, and therefore, the first gas and the second gas are two-atom molecules. That is to say, the first gas and the second gas are gases that have similar molecular structures. Thus, the specific heat ratio "γ₁" of the first gas, the specific heat ratio "γ₂" of the second gas, and the specific heat ratio "γₓ" of the gas mixtures may be regarded as being equal to each other. Therefore, the following Mathematical Expression 4 may be derived from the Mathematical Expression 3:
$\frac{{t}_{2}^{2} - {t}_{x}^{2}}{{t}_{2}^{2} - {t}_{1}^{2}} = \frac{{M}_{2} - {M}_{x}}{{M}_{2} - {M}_{1}} .$

The gas mixtures include the first gas (hydrogen) and the second gas (nitrogen). If the concentration of the first gas is x, then the following Mathematical Expression 5 is satisfied:
${M}_{x} = {M}_{1} x + {M}_{2} \left(1-x\right)$

The following Mathematical Expression 6 is derived from Mathematical Expressions 4 and 5:
$\frac{{t}_{2}^{2} - {t}_{x}^{2}}{{t}_{2}^{2} - {t}_{1}^{2}} = \frac{{M}_{2} - \left({M}_{1}x+{M}_{2}\left(1-x\right)\right)}{{M}_{2} - {M}_{1}} = x .$

That is to say, the concentration measurer 206 calculates the concentration of the first gas by dividing a first differential value by a second differential value. The first differential value is calculated by subtracting the square of the measured propagation time tₓ from the square of the second reference propagation time t₂. The second differential value is calculated by subtracting the square of the first reference propagation time t₁ from the square of the second reference propagation time t₂.

The flow rate measurer 207 measures a flow rate of the gas mixtures flowing through the flow channel 101. The flow rate measurer 207 obtains the flow rate Q of the gas mixtures by the following Mathematical Expression 7. The flow rate Q is calculated by multiplying together a cross-sectional area S of the flow channel 101 and a flow velocity V. Also, based on the relationship between the flow velocity V, the length L of the ultrasonic wave propagation path 106 (i.e., the gap distance L between the first ultrasonic transducer 11 and the second ultrasonic transducer 12), the first-direction propagation time tᵤₚ, the second-direction propagation time t_{dw}, and the angle θ formed by the ultrasonic wave propagation path 106 with respect to the flow channel 101, "Q = SV" may be modified into the right side of the following Mathematical Expression 7:
$Q = SV = \frac{SL}{2 cosθ} \left(\frac{1}{{t}_{up}}-\frac{1}{{t}_{dw}}\right) .$

The flow rate measurer 207 calculates the flow rate Q of the gas mixtures by the Mathematical Expression 7 using, as pieces of information for use to measure the physical quantity, the gap distance L between the first ultrasonic transducer 11 and the second ultrasonic transducer 12, the angle θ formed by the ultrasonic wave propagation path 106 with respect to the flow channel 101, the cross-sectional area S, all of which have been stored in advance in the storage unit 24, and the first-direction propagation time tᵤₚ and second-direction propagation time t_{dw} that have been calculated by the first signal processor 201.

Optionally, the flow rate measurer 207 may calculate a converted flow rate by converting the flow rate Q thus calculated into a flow rate at 0°C and 1 atm.

### (3) Operation

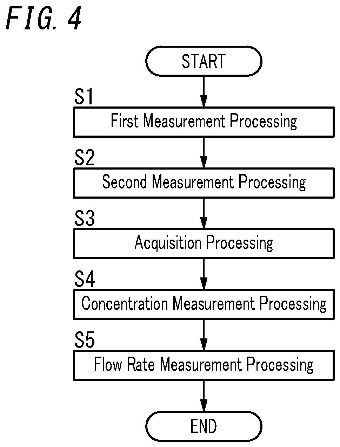

Next, it will be described with reference to FIG. 4 how the physical quantity measurement system 1 operates.

The first signal processor 201 performs first measurement processing (in Step S1). Specifically, the first signal processor 201 measures a first-direction propagation time tᵤₚ of an ultrasonic wave transmitted from the first ultrasonic transducer 11 toward the second ultrasonic transducer 12. In addition, the first signal processor 201 also measures a second-direction propagation time t_{dw} of an ultrasonic wave transmitted from the second ultrasonic transducer 12 toward the first ultrasonic transducer 11. Furthermore, the first signal processor 201 calculates an average value of the first-direction propagation time tᵤₚ and the second-direction propagation time t_{dw} as an ultrasonic wave propagation time tₐ.

The second signal processor 202 performs second measurement processing (in Step S2). Specifically, the second signal processor 202 obtains, based on the output signal of the temperature sensor 13, the temperature Tₐ measured by the temperature sensor 13.

The physical quantity measurement system 1 performs acquisition processing (in Step S3). The first acquirer 203 acquires a measured propagation time tₓ according to the reference temperature T₀ by converting the ultrasonic wave propagation time tₐ calculated in the first measurement processing into the measured propagation time tₓ. For example, the first acquirer 203 acquires the measured propagation time tₓ by converting, using Mathematical Expression 1, the propagation time tₐ into a measured propagation time tₓ in a situation where the temperature is 20°C. The second acquirer 204 acquires the first reference propagation time t₁ of the ultrasonic wave in a situation where the first gas is flowing through the flow channel 101 and the second gas is not flowing through the flow channel 101. The first reference propagation time t₁ has been stored in advance in the storage unit 24. The third acquirer 205 acquires the ultrasonic wave propagation time t₂ in a situation where the second gas is flowing through the flow channel 101 and the first gas is not flowing through the flow channel 101. The ultrasonic wave propagation time t₂ has been stored in advance in the storage unit 24. In this case, the first reference propagation time t₁ and the second reference propagation time t₂ are propagation times according to the reference temperature.

The concentration measurer 206 performs concentration measurement processing (in Step S4). The concentration measurer 206 measures the concentration x of the first gas using the measured propagation time tₓ, the first reference propagation time t₁, and the second reference propagation time t₂. More specifically, the concentration measurer 206 calculates the concentration of the first gas by dividing a first differential value by a second differential value. The first differential value is calculated by subtracting the square of the measured propagation time tₓ from the square of the second reference propagation time t₂. The second differential value is calculated by subtracting the square of the first reference propagation time t₁ from the square of the second reference propagation time t₂.

The flow rate measurer 207 performs flow rate measurement processing (in Step S5). The flow rate measurer 207 measures the flow rate of the gas mixtures flowing through the flow channel 101. More specifically, the flow rate measurer 207 calculates the flow rate Q of the gas mixtures by the Mathematical Expression 7.

### (4) Advantages

As can be seen from the foregoing description, a physical quantity measurement system 1 according to the first embodiment includes a flow channel 101, a pair of ultrasonic transducers 11, 12, a temperature sensor 13, a first acquirer 203, a second acquirer 204, a third acquirer 205, and a concentration measurer 206. The flow channel 101 allows gas mixtures including a first gas and a second gas to flow therethrough. The pair of ultrasonic transducers 11, 12 transmit and receive an ultrasonic wave and are arranged to cause the ultrasonic wave to cross the flow of the gas mixtures along the flow channel 101. The temperature sensor 13 measures the temperature of the gas mixtures. The first acquirer 203 acquires a measured propagation time according to a reference temperature based on an ultrasonic wave propagation time obtained by causing the pair of ultrasonic transducers 11, 12 to transmit and receive the ultrasonic wave, the temperature measured by the temperature sensor 13, and the reference temperature. The second acquirer 204 acquires a first reference propagation time of the ultrasonic wave in a situation where at least the first gas is flowing through the flow channel 101 and the second gas is not flowing through the flow channel 101. The third acquirer 205 acquires a second reference propagation time of the ultrasonic wave in a situation where at least the second gas is flowing through the flow channel 101 and the first gas is not flowing through the flow channel 101. The concentration measurer 206 measures a concentration of the first gas using the measured propagation time, the first reference propagation time, and the second reference propagation time.

According to this configuration, the concentration of the first gas is measured using the measured propagation time, the first reference propagation time, and the second reference propagation time, thus allowing the concentration of the gas included in the gas mixtures to be measured by a different measuring method from the known measuring method.

### (5) Variations

Next, variations will be enumerated one after another. Note that the variations to be described below may be adopted as appropriate in combination with the first embodiment.

### (5.1) First variation

In the first embodiment described above, the second acquirer 204 is configured to acquire the first reference propagation time t₁ that has been calculated by using the first molecular weight M₁, the first molar specific heat cₚ₁ at constant pressure, the first molar specific heat cᵥ₁ at constant volume, the gas constant R, the reference temperature T₀, and the gap distance L between the pair of ultrasonic transducers 11, 12. However, this configuration is only an example and should not be construed as limiting. Alternatively, the processing device 20 may store, in advance, a first propagation time t₁₁, which is an ultrasonic wave propagation time measured in advance in a situation where the first gas is flowing through the flow channel 101 and the second gas is not flowing through the flow channel 101. In that case, the temperature Tₐ (hereinafter referred to as a "first temperature Tₐ₁") which was measured by the temperature sensor 13 when the first propagation time t₁₁ was measured is also stored in advance. For example, the processing device 20 measures the first propagation time t₁₁ when the processing device 20 is manufactured or shipped, and stores the first propagation time t₁₁ as a result of measurement in the storage unit 24. In addition, the processing device 20 also stores, in the storage unit 24, the first temperature Tₐ₁ measured by the temperature sensor 13 when the first propagation time t₁₁ is measured. The physical quantity measurement system 1 calculates, when measuring the concentration x of the first gas, the first reference propagation time t₁ according to the reference temperature T₀ based on the first propagation time t₁₁ and the first temperature Tₐ₁ that have been stored in advance, thereby acquiring the first reference propagation time t₁. The second acquirer 204 may convert the first propagation time t₁₁ that has been measured in advance into the first reference propagation time t₁ as a propagation time according to the reference temperature T₀ by, for example, replacing "tₐ" and "T" with "t₁₁" and "Tₐ₁," respectively, in the Mathematical Expression 1 described above.

Also, the third acquirer 205 is configured to acquire the second reference propagation time t₂ that has been calculated by using the second molecular weight M₂, the second molar specific heat cₚ₂ at constant pressure, the second molar specific heat cᵥ₂ at constant volume, the gas constant R, and the gap distance L between the pair of ultrasonic transducers 11, 12. However, this configuration is only an example and should not be construed as limiting. Alternatively, the processing device 20 may store, in advance, a second propagation time t₂₁, which is an ultrasonic wave propagation time that has been measured in advance in a situation where the second gas is flowing through the flow channel and the first gas is not flowing through the flow channel. In that case, the temperature Tₐ (hereinafter referred to as a "second temperature Tₐ₂") which was measured by the temperature sensor 13 when the second propagation time t₂₁ was measured is also stored in advance. For example, the processing device 20 measures the second propagation time t₂₁ when the processing device 20 is manufactured or shipped, and stores the second propagation time t₂₁ as a result of measurement in the storage unit 24. In addition, the processing device 20 also stores, in the storage unit 24, the second temperature Tₐ₂ which was measured by the temperature sensor 13 when the second propagation time t₂₁ was measured. The physical quantity measurement system 1 calculates, when measuring the concentration x of the first gas, the second reference propagation time t₂ according to the reference temperature T₀ based on the second propagation time t₂₁ and the second temperature Tₐ₂ that have been stored in advance, thereby acquiring the second reference propagation time t₂. The third acquirer 205 may convert the second propagation time t₂₁ that has been measured in advance into the second reference propagation time t₂ as a propagation time according to the reference temperature T₀ by, for example, replacing "tₐ" and "T" with "t₂₁" and "Tₐ₂," respectively, in the Mathematical Expression 1 described above.

That is to say, the processing device 20 may store, in advance, at least one of the first propagation time t₁₁ or the second propagation time t₂₁. In other words, the processing device 20 may store, in advance, at least one set of parameters, namely, the set of the first propagation time t₁₁ and the first temperature Tₐ₁ and/or the set of the second propagation time t₂₁ and the second temperature Tₐ₂.

Alternatively, the processing device 20 may store, in advance at least one of the first reference propagation time t₁ calculated based on the first propagation time t₁₁, the first temperature Tₐ₁, and the reference temperature T₀ that were measured when the processing device 20 was manufactured or shipped or the second reference propagation time t₂ calculated based on the second propagation time t₂₁, the second temperature Tₐ₂, and the reference temperature T₀ that were measured when the processing device 20 was manufactured or shipped.

### (5.2) Second variation

The second acquirer 204 may calculate, whenever measuring the concentration x of the first gas, a propagation time (hereinafter referred to as a "first provisional propagation time" in the following description of the second variation) using the first molecular weight M₁, the first molar specific heat cₚ₁ at constant pressure, the first molar specific heat cᵥ₁ at constant volume, the gas constant R, the temperature Tₐ measured by the temperature sensor 13, and the gap distance L between the pair of ultrasonic transducers 11, 12. In that case, the second acquirer 204 may acquire the first reference propagation time t₁ by converting the first provisional propagation time thus calculated into the first reference propagation time t₁ by the Mathematical Expression 1 using the temperature Tₐ measured by the temperature sensor 13 and the reference temperature T₀.

In the same way, the third acquirer 205 may calculate, whenever measuring the concentration x of the first gas, a propagation time (hereinafter referred to as a "second provisional propagation time" in the following description of the second variation) using the second molecular weight M₂, the second molar specific heat cₚ₂ at constant pressure, the second molar specific heat cᵥ₂ at constant volume, the gas constant R, the temperature Tₐ measured by the temperature sensor 13, and the gap distance L between the pair of ultrasonic transducers 11, 12. In that case, the third acquirer 205 may acquire the second reference propagation time t₂ by converting the second provisional propagation time thus calculated into the second reference propagation time t₂ by the Mathematical Expression 1 using the temperature Tₐ measured by the temperature sensor 13 and the reference temperature T₀.

Alternatively, the second acquirer 204 may calculate (acquire), whenever measuring the concentration x of the first gas, the first reference propagation time t₁ using the first molecular weight M₁, the first molar specific heat cₚ₁ at constant pressure, the first molar specific heat cᵥ₁ at constant volume, the gas constant R, the gap distance L between the pair of ultrasonic transducers 11, 12, and the reference temperature T₀.

In the same way, the third acquirer 205 may calculate (acquire), whenever measuring the concentration x of the first gas, the second reference propagation time t₂ using the second molecular weight M₂, the second molar specific heat cₚ₂ at constant pressure, the second molar specific heat cᵥ₂ at constant volume, the gas constant R, the gap distance L between the pair of ultrasonic transducers 11, 12, and the reference temperature T₀.

### (5.3) Third variation

The flow channel body 10 may further include one or more partitions. The one or more partitions divide the flow channel 101 into multiple sections in a height direction (Z-direction) defined with respect to the flow channel 101. When the one or more partitions divide the flow channel 101 into multiple sections, a multilayer flow channel is formed in the flow channel 101. This configuration not only increases the aspect ratio of the flow channel cross section of each layer of the multilayer flow channel to turn the flow into a two-dimensional flow but also rectifies the flow and stabilizes the turbulence.

### (5.4) Fourth variation

The flow channel body 10 may include a plurality of temperature sensors 13. That is to say, the physical quantity measurement system 1 may include a plurality of temperature sensors 13. If the flow channel body 10 includes a plurality of temperature sensors 13, then the second signal processor 202 calculates, as the temperature Tₐ of the gas mixtures, an average value of the respective temperatures measured by the plurality of temperature sensors 13.

### (5.5) Fifth variation

In the embodiment described above, adopted is a configuration in which the first and second ultrasonic transducers 11, 12 are arranged at an upstream point and a downstream point, respectively, to face each other, i.e., a configuration in which the arrangement direction of the first and second ultrasonic transducers 11, 12 intersects with the X-direction. However, this configuration is only an example and should not be construed as limiting.

Alternatively, the first and second ultrasonic transducers 11, 12 may also be arranged in the X-direction, i.e., may also be arranged such that their arrangement direction does not intersect with the X-direction.

In that case, the ultrasonic wave sent out from the first ultrasonic transducer 11 is reflected inside the flow channel 101, so that the ultrasonic wave thus reflected reaches the second ultrasonic transducer 12. On the other hand, the ultrasonic wave sent out from the second ultrasonic transducer 12 is reflected inside the flow channel 101, so that the ultrasonic wave thus reflected reaches the first ultrasonic transducer 11. That is to say, the ultrasonic wave propagation path has a V-shape and crosses the flow of the gas mixtures along the flow channel 101. In other words, in this fourth variation, the pair of ultrasonic transducers 11, 12 are arranged such that the ultrasonic wave crosses the flow of the gas mixtures along the flow channel 101.

### (Second embodiment)

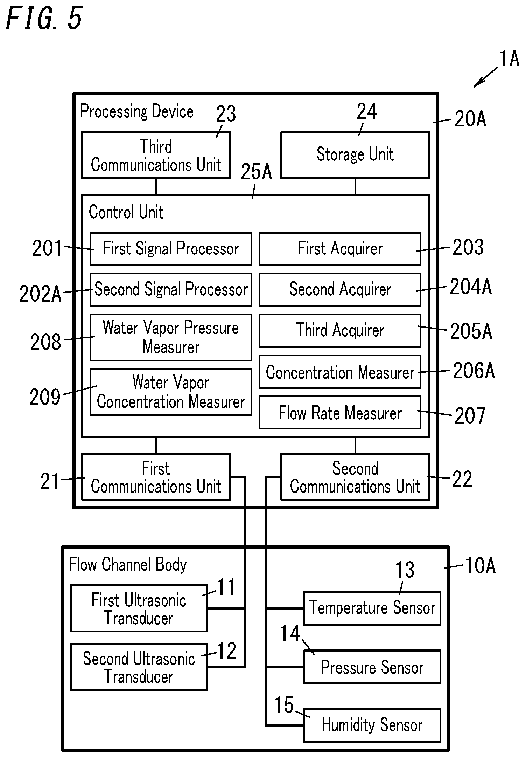

A physical quantity measurement system 1A according to a second embodiment will be described with reference to FIGS. 5-7. The physical quantity measurement system 1A according to the second embodiment measures the concentration of the first gas in a situation where the gas mixtures include not only the first gas and the second gas but also water vapor as well, which is a difference from the physical quantity measurement system 1 according to the first embodiment described above. The following description will be focused on their differences. In the following description, any constituent element of this second embodiment, having the same function as a counterpart of the first embodiment described above, will be designated by the same reference numeral as that counterpart's, and description thereof will be omitted herein.

### (2) Configuration

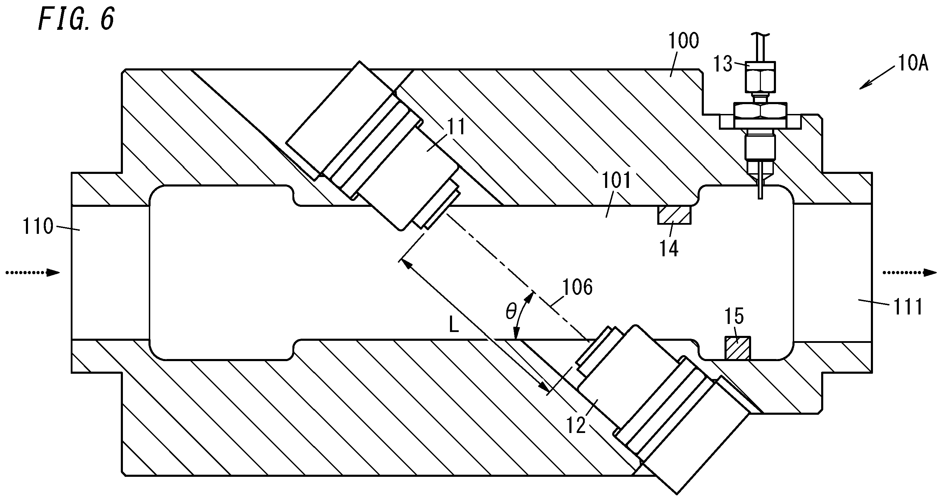

A configuration for the physical quantity measurement system 1A will now be described in detail with reference to FIGS. 5 and 6.

The physical quantity measurement system 1A includes a flow channel body 10A and a processing device 20A as shown in FIG. 5. The physical quantity measurement system 1A measures, as physical quantities, the concentration of hydrogen (hydrogen concentration) included in the gas mixtures flowing through the flow channel body 10A, a flow rate of the gas mixtures, the water vapor pressure of water vapor included in the gas mixtures, and the concentration of the water vapor (water vapor concentration). In this case, the concentration measured by the physical quantity measurement system 1A may be, for example, a volume concentration. FIG. 6 is a cross-sectional view, taken along an X-Y plane defined for the first embodiment, of the flow channel body 10A. Note that the cross sections of the pair of ultrasonic transducers 11, 12 and the temperature sensor 13 are not shown in FIG. 6. In addition, a pressure sensor 14 and a humidity sensor 15 are shown schematically in FIG. 6.

### (2.1) Flow channel body

The gas mixtures flow through the flow channel body 10A. The flow channel body 10A includes the pair of ultrasonic transducers 11, 12, the temperature sensor 13, the pressure sensor 14, and the humidity sensor 15 as shown in FIG. 1. The flow channel body 10A further includes a body 100 as shown in FIG. 6. Note that in the following description, when the ultrasonic transducer 11 is referred to as a "first ultrasonic transducer 11," the ultrasonic transducer 12 will be hereinafter sometimes referred to as a "second ultrasonic transducer 12."

The pressure sensor 14 measures the pressure of the gas mixtures flowing through the flow channel 101. The humidity sensor 15 is disposed at a downstream point of the flow channel 101, for example.

The humidity sensor 15 measures the humidity of the gas mixtures. The humidity sensor 15 is disposed at a downstream point of the flow channel 101, for example.

### (1.2) Processing device

The processing device 20A includes the first communications unit 21, the second communications unit 22, the third communications unit 23, the storage unit 24, and a control unit 25A as shown in FIG. 5.

The processing device 20A includes a computer system including one or more processors and a memory, for example. The computer system performs the functions of the control unit 25A by making the processor execute a program stored in the memory. In this embodiment, the program to be executed by the processor is stored in advance in the memory of the computer system. Alternatively, the program may also be distributed after having been stored in a non-transitory storage medium such as a memory card or downloaded via a telecommunications line such as the Internet.

The control unit 25A includes the first signal processor 201, a second signal processor 202A, the first acquirer 203, a second acquirer 204A, a third acquirer 205A, a concentration measurer 206A, the flow rate measurer 207, a water vapor pressure measurer 208, and a water vapor concentration measurer 209 as shown in FIG. 5.

The second signal processor 202A receives the output signal of the temperature sensor 13 and subjects the signal thus received to predetermined processing. For example, on receiving the output signal of the temperature sensor 13, the second signal processor 202A subjects the signal thus received to predetermined signal processing to obtain the temperature Tₐ measured by the temperature sensor 13.

In addition, on receiving the output signal of the pressure sensor 14, the second signal processor 202A subjects the signal thus received to predetermined signal processing to obtain the pressure measured by the pressure sensor 14.

Furthermore, on receiving the output signal of the humidity sensor 15, the second signal processor 202A subjects the signal thus received to predetermined signal processing to obtain the humidity measured by the humidity sensor 15.

The water vapor pressure measurer 208 measures the water vapor pressure of water vapor included in the gas mixtures flowing through the flow channel 101. The water vapor pressure measurer 208 measures the water vapor pressure of the water vapor based on the humidity of the gas mixtures as measured by the humidity sensor 15 and the temperature of the gas mixtures as measured by the temperature sensor 13.

The water vapor concentration measurer 209 measures the concentration of water vapor included in the gas mixtures. In this embodiment, the water vapor concentration measurer 209 measures a water vapor concentration, which is the concentration of water vapor included in the gas mixtures, using the water vapor pressure measured by the water vapor pressure measurer 208 and the pressure of the gas mixtures as measured by the pressure sensor 14. That is to say, the water vapor concentration measurer 209 measures the water vapor concentration using the pressure of the gas mixtures as measured by the pressure sensor 14, the humidity measured by the humidity sensor 15, and the temperature measured by the temperature sensor 13.

The first acquirer 203 acquires, based on the ultrasonic wave propagation time tₐ calculated by the first signal processor 201, the temperature Tₐ measured by the temperature sensor 13, and the reference temperature T₀, a measured propagation time tₓ converted into a propagation time according to a reference temperature T₀.

The second acquirer 204A acquires the first reference propagation time t_{w1} by calculating the ultrasonic wave propagation time t_{w1} (hereinafter referred to as a "first reference propagation time t_{w1}" in the following description of the second embodiment), in a situation where the first gas and the water vapor are flowing through the flow channel 101 and the second gas is not flowing through the flow channel 101, based on first gas information about the first gas, water vapor information about the water vapor, the gas constant R, the gap distance L between the pair of ultrasonic transducers, the reference temperature T₀, and the water vapor concentration measured by the water vapor concentration measurer 209. In the second embodiment, the first gas information includes the first molecular weight M₁ of the first gas and the specific heat ratio (hereinafter referred to as a "first specific heat ratio") of the first gas. The first gas information includes, as the specific heat ratios of the first gas, the first molar specific heat cₚ₁ at constant pressure of the first gas and the first molar specific heat cᵥ₁ at constant volume of the first gas. The water vapor information includes the molecular weight M_{w} of the water vapor and the specific heat ratios (hereinafter referred to as "third specific heat ratios") of the water vapor. The water vapor information includes, as the specific heat ratios of the water vapor, a molar specific heat c_{pw} at constant pressure of the water vapor and a molar specific heat c_{vw} at constant volume of the water vapor.

If the gas mixtures include the first gas (hydrogen) and water vapor, then the following Mathematical Expressions 8-10 are satisfied. In these mathematical expressions, M_{hw} is the molecular weight of the gas mixtures including the first gas and water vapor and x_{w} is the water vapor concentration.${M}_{hw} = \left(1-{x}_{w}\right) {M}_{1} + {x}_{w} {M}_{w}$ ${c}_{p} = \left(1-{x}_{w}\right) {c}_{p 1} + {x}_{w} {c}_{pw}$${c}_{v} = \left(1-{x}_{w}\right) {c}_{v 1} + {x}_{w} {c}_{vw}$

Furthermore, the following Mathematical Expression 11 with respect to the first reference propagation time t_{w1} is derived from Mathematical Expression 2 and Mathematical Expressions 8-10:
${t}_{w 1}^{2} = \frac{{L}^{2}}{{c}^{2}} = \frac{{ML}^{2}}{γRT} = \frac{\left(1-{x}_{w}\right) {M}_{1} + {x}_{w} {M}_{w}}{\frac{{c}_{p 1} \left(1-{x}_{w}\right) + {c}_{pw} {x}_{w}}{{c}_{v 1} \left(1-{x}_{w}\right) + {c}_{vw} {x}_{w}}} \left(\frac{{L}^{2}}{RT}\right)$

In this case, in the storage unit 24, stored as pieces of information for use to measure the physical quantity are the first gas information, the second gas information, the water vapor information, the gas constant R, the reference temperature T₀, and the gap distance L between the pair of ultrasonic transducers 11, 12.

The second acquirer 204A acquires the first reference propagation time t_{w1} by calculating the first reference propagation time t_{w1} of the ultrasonic wave, in a situation where the first gas and the water vapor are flowing through the flow channel 101 and the second gas is not flowing through the flow channel 101, by the Mathematical Expression 11 using the first gas information, the water vapor information, the gas constant R, the reference temperature T₀, and the gap distance L between the pair of ultrasonic transducers 11, 12, all of which have been stored in advance in the storage unit 24.

The third acquirer 205A acquires the second reference propagation time t_{w2} by calculating the ultrasonic wave propagation time t_{w2} (hereinafter referred to as a "second reference propagation time t_{w2}" in the following description of the second embodiment), in a situation where the second gas and the water vapor are flowing through the flow channel 101 and the first gas is not flowing through the flow channel 101, based on the second gas information about the second gas, the water vapor information about the water vapor, the gas constant R, the gap distance L between the pair of ultrasonic transducers, the reference temperature T₀, and the water vapor concentration measured by the water vapor concentration measurer 209,. In the second embodiment, the second gas information includes the second molecular weight M₂ of the second gas and the specific heat ratios (hereinafter referred to as "second specific heat ratios") of the second gas. The second gas information includes, as specific heat ratios of the second gas, a second molar specific heat cₚ₂ at constant pressure of the second gas and second molar specific heat cᵥ₂ at constant volume of the second gas.

If the gas mixtures include the second gas (nitrogen) and water vapor, mathematical expressions similar to Mathematical Expressions 8-10 are satisfied. For example, suppose that the molecular weight of the gas mixtures including the second gas and water vapor is M_{nw}, the second molecular weight of the second gas (nitrogen) is M₂, the second molar specific heat at constant pressure is cₚ₂, and the second molar specific heat at constant volume is cᵥ₂. Also, suppose that the molecular weight of water vapor is M_{w}, the molar specific heat at constant pressure is c_{pw}, the molar specific heat at constant volume is c_{vw}, and the water vapor concentration is x_{w}. Mathematical expressions similar to Mathematical Expressions 8-11 are derived by replacing M_{hw}, M₁, cₚ₁, and cᵥ₁ with M_{nw}, M₂, cₚ₂, and cᵥ₂, respectively.

The third acquirer 205A acquires the second reference propagation time t_{w2} by calculating the second reference propagation time t_{w2} of the ultrasonic wave, in a situation where the second gas and the water vapor are flowing through the flow channel 101 and the first gas is not flowing through the flow channel 101, by the Mathematical Expression 11 using the second gas information, the water vapor information, the gas constant R, the reference temperature T₀, and the gap distance L between the pair of ultrasonic transducers 11, 12, all of which have been stored in advance in the storage unit 24,.

The concentration measurer 206A measures the concentration x of the first gas using the measured propagation time tₓ, the first reference propagation time t_{w1}, and the second reference propagation time t_{w2}. Specifically, the concentration measurer 206A measures the concentration x of the first gas by the following Mathematical Expression 12 derived by replacing t₁ and t₂ with t_{w1} and t_{w2}, respectively, in Mathematical Expression 6.$\frac{{t}_{w 2}^{2} - {t}_{x}^{2}}{{t}_{w 2}^{2} - {t}_{w 1}^{2}} = x$

That is to say, the concentration measurer 206A calculates the concentration of the first gas by dividing a first differential value by a second differential value. The first differential value is calculated by subtracting the square of the measured propagation time tₓ from the square of a second reference propagation time t_{w2}. The second differential value is calculated by subtracting the square of the first reference propagation time t_{w1} from the square of the second reference propagation time t_{w2}.

### (2) Operation

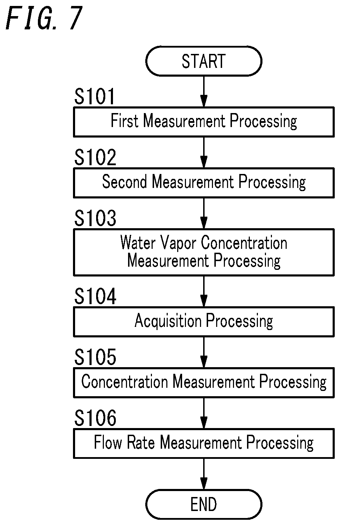

Next, it will be described with reference to FIG. 7 how the physical quantity measurement system 1A operates.

The first signal processor 201 performs first measurement processing (in Step S101). Specifically, the first signal processor 201 measures a first-direction propagation time tᵤₚ of an ultrasonic wave transmitted from the first ultrasonic transducer 11 toward the second ultrasonic transducer 12. In addition, the first signal processor 201 also measures a second-direction propagation time t_{dw} of an ultrasonic wave transmitted from the second ultrasonic transducer 12 toward the first ultrasonic transducer 11. Furthermore, the first signal processor 201 calculates an average value of the first-direction propagation time tᵤₚ and the second-direction propagation time t_{dw} as an ultrasonic wave propagation time tₐ.

The second signal processor 202A performs second measurement processing (in Step S102). Specifically, the second signal processor 202A obtains, based on the output signal of the temperature sensor 13, the temperature Tₐ measured by the temperature sensor 13. The second signal processor 202A obtains, based on the output signal of the pressure sensor 14, the pressure measured by the pressure sensor 14. Furthermore, the second signal processor 202A obtains, based on the output signal of the humidity sensor 15, the humidity measured by the humidity sensor 15.

The physical quantity measurement system 1A performs water vapor concentration measurement processing (in Step S103). The water vapor pressure measurer 208 measures the water vapor pressure of the water vapor based on the humidity of the gas mixtures as measured by the humidity sensor 15 and the temperature of the gas mixtures as measured by the temperature sensor 13. The water vapor concentration measurer 209 measures a water vapor concentration, which is the concentration of the water vapor included in the gas mixtures, based on the water vapor pressure measured by the water vapor pressure measurer 208 and the pressure of the gas mixtures as measured by the pressure sensor 14.

The physical quantity measurement system 1A performs acquisition processing (in Step S104). The first acquirer 203 converts the ultrasonic wave propagation time tₐ calculated by the first measurement processing into a measured propagation time tₓ. For example, the first acquirer 203 converts, by Mathematical Expression 1, the propagation time tₐ into the measured propagation time tₓ as a propagation time according to the reference temperature T₀. The second acquirer 204A acquires the first reference propagation time t_{w1} by calculating the first reference propagation time t_{w1}, in a situation where the first gas and the water vapor are flowing through the flow channel 101 and the second gas is not flowing through the flow channel 101, by the Mathematical Expression 11 using the first gas information, the water vapor information, the gas constant R, the reference temperature T₀, and the gap distance L between the pair of ultrasonic transducers 11, 12. The third acquirer 205A acquires the second reference propagation time t_{w2} by calculating the second reference propagation time t_{w2}, in a situation where the second gas and the water vapor are flowing through the flow channel 101 and the first gas is not flowing through the flow channel 101, by the Mathematical Expression 11 using the second gas information, the water vapor information, the gas constant R, the reference temperature T₀, and the gap distance L between the pair of ultrasonic transducers 11, 12.

The concentration measurer 206A performs concentration measurement processing (in Step S105). The concentration measurer 206A measures the concentration x of the first gas using the measured propagation time tₓ, the first reference propagation time t_{w1}, and the second reference propagation time t_{w2}. More specifically, the concentration measurer 206A calculates the concentration of the first gas by dividing a first differential value by a second differential value. The first differential value is calculated by subtracting the square of the measured propagation time tₓ from the square of the second reference propagation time t_{w2}. The second differential value is calculated by subtracting the square of the first reference propagation time t_{w1} from the square of the second reference propagation time t_{w2}.

The flow rate measurer 207 performs flow rate measurement processing (in Step S106). The flow rate measurer 207 measures the flow rate of the gas mixtures flowing through the flow channel 101. More specifically, the flow rate measurer 207 calculates the flow rate Q of the gas mixtures by the Mathematical Expression 7.

Note that the physical quantity measurement system 1A performs Steps S101-S106 as their respective operations shown in FIG. 7 whenever measuring the concentration of the first gas.

### (3) Advantages

A physical quantity measurement system 1A according to the second embodiment includes a flow channel 101, a pair of ultrasonic transducers 11, 12, a temperature sensor 13, a pressure sensor 14, a humidity sensor 15, a water vapor concentration measurer 209, a first acquirer 203, a second acquirer 204, a third acquirer 205A, and a concentration measurer 206A. The flow channel 101 allows gas mixtures including a first gas and a second gas to flow therethrough. The pair of ultrasonic transducers 11, 12 transmit and receive an ultrasonic wave and are arranged to cause the ultrasonic wave to cross the flow of the gas mixtures along the flow channel 101. The temperature sensor 13 measures the temperature of the gas mixtures. The pressure sensor 14 measures the pressure of the gas mixtures. The humidity sensor 15 measures the humidity of the gas mixtures. The first acquirer 203 acquires a measured propagation time according to a reference temperature based on an ultrasonic wave propagation time obtained by causing the pair of ultrasonic transducers 11, 12 to transmit and receive the ultrasonic wave, the temperature measured by the temperature sensor 13, and the reference temperature. The second acquirer 204A acquires a first reference propagation time of the ultrasonic wave in a situation where at least the first gas is flowing through the flow channel 101 and the second gas is not flowing through the flow channel 101. The third acquirer 205A acquires a second reference propagation time of the ultrasonic wave in a situation where at least the second gas is flowing through the flow channel 101 and the first gas is not flowing through the flow channel 101. The concentration measurer 206A measures the concentration of the first gas using the measured propagation time, the first reference propagation time, and the second reference propagation time. The water vapor concentration measurer 209 measures a water vapor concentration using the pressure of the gas mixtures as measured by the pressure sensor 14, the humidity measured by the humidity sensor 15, and the temperature measured by the temperature sensor 13. The second acquirer 204A acquires the first reference propagation time by calculating the first reference propagation time, in a situation where the first gas and the water vapor are flowing through the flow channel 101 and the second gas is not flowing through the flow channel 101, based on first gas information about the first gas, water vapor information about the water vapor, a gas constant, a gap distance between the pair of ultrasonic transducers 11, 12, the reference temperature, and the water vapor concentration measured by the water vapor concentration measurer 209. The third acquirer 205A acquires the second reference propagation time by calculating the second reference propagation time, in a situation where the second gas and the water vapor are flowing through the flow channel 101 and the first gas is not flowing through the flow channel 101, based on second gas information about the second gas, the water vapor information, the gas constant, the gap distance between the pair of ultrasonic transducers, the reference temperature, and the water vapor concentration measured by the water vapor concentration measurer 209.

According to this configuration, the concentration of the first gas is measured using the measured propagation time, the first reference propagation time, and the second reference propagation time, thus allowing the concentration of a gas included in the gas mixtures to be measured by a different measuring method from the known measuring method.

In the first embodiment described above, the gas mixtures do not include water vapor. In addition, both the first gas and the second gas are two-atom molecules, and therefore, the respective specific heat ratios of the first and second gases may be regarded as being the same. On the other hand, in the second embodiment, the gas mixtures include water vapor as a multi-atom molecule and the first and second gases which are two-atom molecules. Therefore, the respective specific heat ratios of the first gas, the second gas, and the water vapor cannot be regarded as being the same. Thus, according to the second embodiment, when the first reference propagation time and the second reference propagation time are calculated, a first mathematical expression represented by Mathematical Expression 11 and a second mathematical expression in which "M₁," "cₚ₁," and "cᵥ₁" in the Mathematical Expression 11 are replaced with "M₂," "cₚ₂," and "cᵥ₂," respectively, are used. Using the first mathematical expression and the second mathematical expression allows the first reference propagation time of the first gas and the second reference propagation time of the second gas to be corrected according to the concentration of the water vapor.

### (4) Variations

Next, variations will be enumerated one after another. Note that the variations to be described below may be adopted as appropriate in combination with the second embodiment.

### (4.1) First variation

The processing device 20A may store, in advance, at least one of an ultrasonic wave propagation time t₁₁ (hereinafter referred to as a "first propagation time t₁₁" in the following description of the first variation) which has been measured in advance in a situation where the first gas is flowing through the flow channel 101 and the second gas is not flowing through the flow channel 101 or an ultrasonic wave propagation time t₂₁ (hereinafter referred to as a "second propagation time t₂₁" in the following description of the first variation) which has been measured in advance in a situation where the second gas is flowing through the flow channel 101 and the first gas is not flowing through the flow channel 101.

The processing device 20A measures the first propagation time t₁₁ when the processing device 20A is manufactured or shipped, and stores the first propagation time t₁₁ as a result of measurement in the storage unit 24. At this time, the processing device 20A also stores, in advance, the temperature Tₐ (hereinafter referred to as a "first temperature Tₐ₁") which was measured by the temperature sensor 13 when the first propagation time t₁₁ was measured.

If the physical quantity measurement system 1A measures the concentration of the first gas, the second acquirer 204A of the processing device 20A acquires the first reference propagation time t_{w1} by performing, on the first propagation time t₁₁ that has been stored in advance, a temperature conversion based on the first temperature Tₐ₁ measured by the temperature sensor 13 when the first propagation time t₁₁ was measured and the reference temperature T₀ and a humidity conversion based on the water vapor concentration measured by the water vapor concentration measurer 209.

The second acquirer 204A performs, on the first propagation time t₁₁ that has been stored in advance, a temperature conversion by the Mathematical Expression 1 using the first temperature Tₐ₁ measured by the temperature sensor 13 when the first propagation time t₁₁ was measured and the reference temperature T₀, thereby converting the first propagation time t₁₁ into a first temperature converted time t_{wt1} according to the reference temperature T₀. In this embodiment, the gas mixtures include not only the first gas but also the water vapor as well. Thus, the first temperature converted time t_{wt1} needs to be further converted into a propagation time in view of the water vapor (i.e., the first reference propagation time t_{w1}).

Thus, the second acquirer 204A performs a humidity conversion to convert the first temperature converted time t_{wt1} into the first reference propagation time t_{w1}. Specifically, the second acquirer 204 converts the first temperature converted time t_{wt1} into the first reference propagation time t_{w1} by the following Mathematical Expression 13. In Mathematical Expression 13, c_{d} is a speed of sound in a situation where the gas mixtures do not include water vapor, and c₁ is a speed of sound in a situation where the gas mixtures include water vapor.

The second acquirer 204A converts the first temperature converted time t_{wt1} thus calculated into the first reference propagation time t_{w1} by the following Mathematical Expression 13 using the first molar specific heat cₚ₁ at constant pressure and the first molar specific heat cᵥ₁ at constant volume that have been stored in advance in the storage unit 24. ${t}_{w 1}^{2} = {t}_{wt 1}^{2} \times \frac{{c}_{d}^{2}}{{c}_{1}^{2}} = {t}_{wt 1}^{2} \times \frac{\left(1-{x}_{w}\right) {M}_{1} + {x}_{w} {M}_{w}}{\frac{{c}_{p 1} \left(1-{x}_{w}\right) + {c}_{pw} {x}_{w}}{{c}_{v 1} \left(1-{x}_{w}\right) + {c}_{vw} {x}_{w}}} \times \frac{{c}_{p 1}}{{c}_{v 1}} \times \frac{1}{{M}_{1}}$

The processing device 20A measures the second propagation time t₂₁ when the processing device 20A is manufactured or shipped, and stores the second propagation time t₂₁ as a result of measurement in the storage unit 24. At this time, also stored is the temperature Tₐ (hereinafter referred to as a "second temperature Tₐ₂") which was measured by the temperature sensor 13 when the second propagation time t₂₁ was measured.

If the physical quantity measurement system 1A measures the concentration of the first gas, the third acquirer 205A of the processing device 20A converts the second propagation time t₂₁ into the second reference propagation time t_{w2} by performing, on the second propagation time t₂₁ that has been stored in advance, a temperature conversion based on the second temperature Tₐ₂ measured by the temperature sensor 13 when the second propagation time t₂₁ was measured and the reference temperature T₀ and a humidity conversion based on the water vapor concentration measured by the water vapor concentration measurer 209.

The third acquirer 205A converts the second propagation time t₂₁ into a second temperature converted time t_{wt2} according to the reference temperature T₀ by performing, on the second propagation time t₂₁ that has been stored in advance, a temperature conversion by Mathematical Expression 1 using the second temperature Tₐ₂ measured by the temperature sensor 13 when the second propagation time t₂₁ was measured and the reference temperature T0. In this variation, the gas mixtures include not only the second gas but also the water vapor. Thus, the second temperature converted time t_{wt2} needs to be further converted into a propagation time in view of the water vapor (i.e., the second reference propagation time t_{w2}).

Thus, the third acquirer 205A performs a humidity conversion to convert the second temperature converted time t_{w2} into the second reference propagation time t_{w2}. If the gas mixtures include the second gas and the water vapor, a mathematical expression similar to Mathematical Expression 13 is satisfied. For example, supposing the second molar specific heat at constant pressure of the second gas is cₚ₂ and the second molar specific heat at constant volume thereof is cᵥ₂, a mathematical expression similar to Mathematical Expression 13 is derived by replacing t_{w1}, cₚ₁, cᵥ₁, and M₁ with t_{w2}, cₚ₂, cᵥ₂, and M₂, respectively.

The third acquirer 205A converts the second temperature converted time t_{wt2} thus calculated into a second reference propagation time t_{w2} by Mathematical Expression 13 using the second molar specific heat cₚ₂ at constant pressure and the second molar specific heat cᵥ₂ at constant volume which have been stored in advance in the storage unit 24.

Optionally, the processing device 20A may store in advance at least one of: the first temperature converted time t_{wt1} calculated based on the first propagation time t₁₁ and the first temperature Tₐ₁ which were measured when the processing device 20A was manufactured or shipped and the reference temperature T₀; or the second temperature converted time t_{wt2} calculated based on the second propagation time t₂₁ and the second temperature Tₐ₂ which were measured when the processing device 20 was manufactured or shipped and the reference temperature T₀.

### (4.2) Second variation

In the second embodiment, the gas mixtures include the first and second gases as two-atom molecules and water vapor as a multi-atom molecule. However, this configuration is only an example and should not be construed as limiting. Alternatively, the first and second gases included in the gas mixtures may also be single-atom molecules or multi-atom molecules, whichever is appropriate. In that case, the first and second gases may have the same molecular structure or mutually different molecular structures whichever is appropriate.

If the first and second gases have mutually different molecular structures, the denominator term on the right side of the Mathematical Expression 11 representing the first reference propagation time t₁ may be expressed as a constant by a specific heat ratio. In the following Mathematical Expression 14, γₐ is an average value of the respective specific heat ratios of the first gas and the water vapor.${t}_{w 1}^{2} = \frac{\left(1-{x}_{w}\right) {M}_{1} + {x}_{w} {M}_{w}}{{γ}_{a}} \left(\frac{{L}^{2}}{RT}\right)$

Also, the mathematical expression about the second reference propagation time t_{w2} may be expressed as the following Mathematical Expression 15. In the following Mathematical Expression 15, γ_{b} is an average value of the respective specific heat ratios of the second gas and the water vapor.${t}_{w 2}^{2} = \frac{\left(1-{x}_{w}\right) {M}_{2} + {x}_{w} {M}_{w}}{{γ}_{b}} \left(\frac{{L}^{2}}{RT}\right)$

In the second variation, the first gas information includes a first molecular weight of the first gas and a first specific heat ratio of the first gas, the second gas information includes a second molecular weight of the second gas and a second specific heat ratio of the second gas, and the water vapor information includes a third molecular weight of the water vapor and a third specific heat ratio of the water vapor. This allows the second acquirer 204A to calculate γₐ, which is an average value of the respective specific heat ratios of the first gas and the water vapor, and also allows the third acquirer 205A to calculate γ_{b}, which is an average value of the respective specific heat ratios of the second gas and the water vapor.

### (4.3) Third variation

The second acquirer 204A may calculate, whenever measuring the concentration x of the first gas, an ultrasonic wave propagation time (hereinafter referred to as a "first provisional propagation time" in the following description of the third variation) using the first gas information, the water vapor information, the gas constant R, the gap distance L between the pair of ultrasonic transducers, the temperature Tₐ measured by the temperature sensor 13, and the water vapor concentration measured by the water vapor concentration measurer 209. In that case, the second acquirer 204A may acquire the first reference propagation time t_{w1} by converting the first provisional propagation time thus calculated into the first reference propagation time t_{w1} by the Mathematical Expression 1 using the temperature Tₐ measured by the temperature sensor 13 and the reference temperature T₀.

In the same way, the third acquirer 205A may calculate, whenever measuring the concentration x of the first gas, an ultrasonic wave propagation time (hereinafter referred to as a "second provisional propagation time" in the following description of the third variation) using the second gas information, the water vapor information, the gas constant R, the gap distance L between the pair of ultrasonic transducers, the temperature Tₐ measured by the temperature sensor 13, and the water vapor concentration measured by the water vapor concentration measurer 209. In that case, the third acquirer 205A may acquire the second reference propagation time t_{w2} by converting the second provisional propagation time thus calculated into the second reference propagation time t_{w2} by the Mathematical Expression 1 using the temperature Tₐ measured by the temperature sensor 13 and the reference temperature T₀.

Alternatively, the second acquirer 204A may calculate (acquire), whenever measuring the concentration x of the first gas, the first reference propagation time t_{w1} using the first gas information, the water vapor information, the gas constant R, the gap distance L between the pair of ultrasonic transducers, the reference temperature T₀, and the water vapor concentration measured by the water vapor concentration measurer 209.

In the same way, the third acquirer 205A may calculate (acquire), whenever measuring the concentration x of the first gas, the second reference propagation time t_{w2} using the second gas information, the water vapor information, the gas constant R, the gap distance L between the pair of ultrasonic transducers, the reference temperature T₀, and the water vapor concentration measured by the water vapor concentration measurer 209.

### (4.4) Fourth variation

Optionally, at least one of the third, fourth, and fifth variations of the first embodiment is applicable to the second embodiment.

### (Third embodiment)

In a third embodiment, the water vapor concentration is measured using a density sensor instead of the humidity sensor 15, which is a difference from the second embodiment described above. A configuration for a physical quantity measurement system 1B according to the third embodiment will now be described. The following description will be focused on the differences from the physical quantity measurement system 1A according to the second embodiment. In the following description, any constituent element of the physical quantity measurement system 1B, having the same function as a counterpart of the physical quantity measurement system 1A described above, will be designated by the same reference numeral as that counterpart's, and description thereof will be omitted herein.

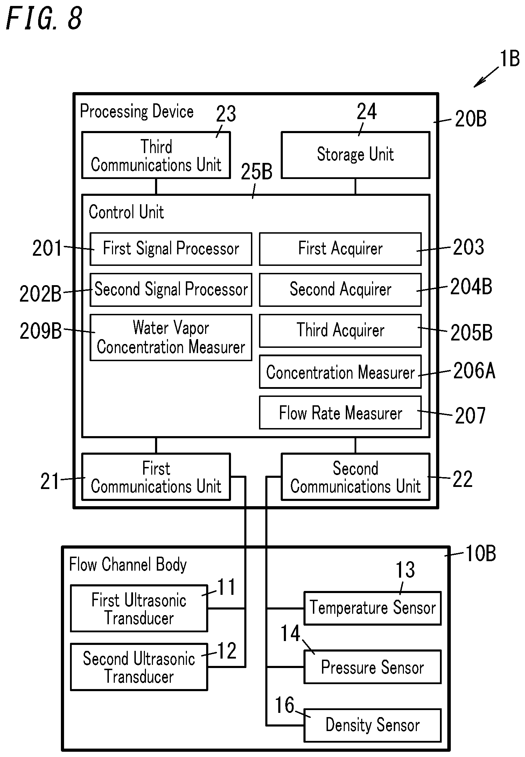

The physical quantity measurement system 1B includes a flow channel body 10B and a processing device 20B as shown in FIG. 8. The physical quantity measurement system 1B measures, as physical quantities, the concentration of hydrogen (hydrogen concentration) included in the gas mixtures flowing through the flow channel body 10B, a flow rate of the gas mixtures, the water vapor pressure of water vapor included in the gas mixtures, and the concentration of the water vapor (water vapor concentration). In this case, the concentration measured by the physical quantity measurement system 1B may be, for example, a volume concentration.

### (1.1) Flow channel body

The gas mixtures flow through the flow channel body 10B. The flow channel body 10B includes the pair of ultrasonic transducers 11, 12, the temperature sensor 13, the pressure sensor 14, and a density sensor 16 as shown in FIG. 8. The flow channel body 10B further includes a body 100 (refer to FIG. 6). Note that in the following description, when the ultrasonic transducer 11 is referred to as a "first ultrasonic transducer 11," the ultrasonic transducer 12 will be hereinafter sometimes referred to as a "second ultrasonic transducer 12."

The density sensor 16 may be, for example, a vibrating tube densimeter. The density sensor 16 measures the density of the gas mixtures flowing through the flow channel 101 (refer to FIG. 6). The density sensor 16 may be disposed at a downward point on the flow channel 101, for example.

### (2.2) Processing device

The processing device 20B includes the first communications unit 21, the second communications unit 22, the third communications unit 23, the storage unit 24, and a control unit 25B as shown in FIG. 8.

The processing device 20B includes a computer system including one or more processors and a memory, for example. The computer system performs the functions of the control unit 25B by making the processor execute a program stored in the memory. In this embodiment, the program to be executed by the processor is stored in advance in the memory of the computer system. Alternatively, the program may also be distributed after having been stored in a non-transitory storage medium such as a memory card or downloaded via a telecommunications line such as the Internet.

The control unit 25B includes the first signal processor 201, a second signal processor 202B, the first acquirer 203, a second acquirer 204B, a third acquirer 205B, the concentration measurer 206A, the flow rate measurer 207, and a water vapor concentration measurer 209B as shown in FIG. 8.

The second signal processor 202B receives the output signal of each of the sensors and subjects the signal thus received to predetermined processing. On receiving the output signal of the temperature sensor 13, the second signal processor 202B subjects the signal thus received to predetermined signal processing to obtain the temperature T measured by the temperature sensor 13. Also, on receiving the output signal of the pressure sensor 14, the second signal processor 202B subjects the signal thus received to predetermined signal processing to obtain the pressure P measured by the pressure sensor 14. Furthermore, on receiving the output signal of the density sensor 16, the second signal processor 202B subjects the signal thus received to predetermined signal processing to obtain the density ρ measured by the density sensor 16.

The second signal processor 202B converts the density ρ thus obtained into a standard density ρ₀ by the following Mathematical Expression 16 using the density ρ, temperature T, and pressure P thus obtained. That is to say, the second signal processor 202B converts the density ρ measured by the density sensor 16 into a standard density ρ₀, which is a density of the gas mixtures in a standard condition. In Mathematical Expression 16, P₀ is the pressure of the gas in the standard condition (i.e., a reference pressure) and T₀ is the temperature of the gas in the standard condition (i.e., a reference temperature). The second signal processor 202B converts the density ρ into the standard density ρ₀ by substituting the density ρ, temperature T, and pressure P thus obtained, the reference pressure P₀, and the reference temperature T₀ for the right side of the Mathematical Expression 16. In this case, the reference pressure P₀ and the reference temperature T₀ have been stored in advance in the storage unit 24. As used herein, the standard condition of the gas refers to a condition at 20°C and 1 atm.${ρ}_{0} = ρ \frac{{P}_{0} T}{{PT}_{0}}$

The water vapor concentration measurer 209B calculates a water vapor concentration x_{w}, which is the concentration of water vapor with respect to the gas mixtures, using the pressure P of the gas mixtures as measured by the pressure sensor 14, the density ρ measured by the density sensor 16, and the temperature T measured by the temperature sensor 13. In this embodiment, the water vapor concentration measurer 209B calculates the water vapor concentration x_{w} by the following Mathematical Expression 17. That is to say, the water vapor concentration measurer 209B calculates the water vapor concentration x_{w} using a standard density ρ derived from the pressure P of the gas mixtures as measured by the pressure sensor 14, the density ρ measured by the density sensor 16, and the temperature T measured by the temperature sensor 13. In the following Mathematical Expression 17, "ρ₁" is the density in the standard condition of hydrogen included in the gas mixtures, "ρ₂" is the density in the standard condition of nitrogen included in the gas mixtures, "ρ_{w}" is the density of the water vapor included in the gas mixtures, and "x" is a hydrogen concentration. The density ρ₁ of hydrogen, the density ρ₂ of nitrogen, and the density ρ_{w} of the water vapor have been stored in advance in the storage unit 24. ${x}_{w} = \frac{ρ \frac{{P}_{0} T}{{PT}_{0}} - {xρ}_{1} - \left(1-x\right) {ρ}_{2}}{{ρ}_{w} - {ρ}_{2}} = \frac{{ρ}_{0} - {xρ}_{1} - \left(1-x\right) {ρ}_{2}}{{ρ}_{w} - {ρ}_{2}}$

The water vapor concentration measurer 209B obtains a water vapor concentration in a situation where at least the first gas (hydrogen) is flowing through the flow channel 101 and the second gas (nitrogen) is not flowing through the flow channel 101. The water vapor concentration measurer 209B obtains a water vapor concentration (hereinafter referred to as a "first water vapor concentration") in a situation where the hydrogen concentration is supposed to be 1. Specifically, the water vapor concentration measurer 209B calculates the first water vapor concentration by substituting the value "1" for "x" in Mathematical Expression 17.

The water vapor concentration measurer 209B obtains a water vapor concentration in a situation where at least the second gas is flowing through the flow channel 101 and the first gas is not flowing through the flow channel 101. The water vapor concentration measurer 209B obtains a water vapor concentration (hereinafter referred to as a "second water vapor concentration") in a situation where the hydrogen concentration is supposed to be 0. Specifically, the water vapor concentration measurer 209B calculates the second water vapor concentration by substituting the value "0" for "x" in Mathematical Expression 17.

The second acquirer 204B acquires the first reference propagation time t_{w1} by calculating the first reference propagation time t_{w1} based on the first gas information about the first gas, the water vapor information about the water vapor, the gas constant R, the gap distance L between the pair of ultrasonic transducers, the reference temperature T₀, and the first water vapor concentration measured by the water vapor concentration measurer 209B. In this embodiment, the second acquirer 204B calculates the first reference propagation time t_{w1} by the Mathematical Expression 11 using the first water vapor concentration.

The third acquirer 205B acquires the second reference propagation time t_{w2} by calculating the second reference propagation time t_{w2}, in a situation where the second gas and the water vapor are flowing through the flow channel 101 and the first gas is not flowing through the flow channel 101, based on the second gas information about the second gas, the water vapor information about the water vapor, the gas constant R, the gap distance L between the pair of ultrasonic transducers, the reference temperature T₀, and the second water vapor concentration measured by the water vapor concentration measurer 209B. In this embodiment, the third acquirer 205B calculates, using the second water vapor concentration, the second reference propagation time t_{w2} by a second mathematical expression in which "M₁," "cₚ₁," and "cᵥ₁" in a first mathematical expression represented by Mathematical Expression 11 are replaced with "M₂," "cₚ₂," and "cᵥ₂," respectively.

The concentration measurer 206A measures the concentration x of the first gas using the measured propagation time tₓ, the first reference propagation time t_{w1}, and the second reference propagation time t_{w2}. Specifically, the concentration measurer 206A measures the concentration x of the first gas by the Mathematical Expression 12.

### (2) Operation

Next, it will be described with reference to FIG. 7 how the physical quantity measurement system 1B operates. The following description will be focused on differences from the operation of the physical quantity measurement system 1B.

The first signal processor 201 of the physical quantity measurement system 1B performs the same processing step (first measurement processing) as Step S101 shown in FIG. 7.

In Step S102, the second signal processor 202B performs second measurement processing. Specifically, the second signal processor 202B obtains, based on the output signal of the temperature sensor 13, the temperature Tₐ measured by the temperature sensor 13. The second signal processor 202B obtains, based on the output signal of the pressure sensor 14, the pressure measured by the pressure sensor 14. Furthermore, the second signal processor 202B obtains, based on the output signal of the density sensor 16, the humidity measured by the density sensor 16.

In Step S103, the water vapor concentration measurer 209B of the physical quantity measurement system 1B performs water vapor concentration measurement processing. Specifically, the water vapor concentration measurer 209B calculates a water vapor concentration x_{w} by the Mathematical Expression 17. More specifically, the water vapor concentration measurer 209B obtains the first water vapor concentration in a situation where the hydrogen concentration is supposed to be "1" and the second water vapor concentration in a situation where the hydrogen concentration is supposed to be "0."

The physical quantity measurement system 1B performs the same processing step (acquisition processing) as Step S104 shown in FIG. 7. Specifically, the first acquirer 203 of the physical quantity measurement system 1B converts the ultrasonic wave propagation time tₐ calculated by the first measurement processing into a measured propagation time tₓ. The second acquirer 204B of the physical quantity measurement system 1B acquires the first reference propagation time t_{w1} by calculating the first reference propagation time t_{w1} of the ultrasonic wave. The third acquirer 205A of the physical quantity measurement system 1B acquires the second reference propagation time t_{w2} by calculating the second reference propagation time t_{w2} of the ultrasonic wave.

The concentration measurer 206A of the physical quantity measurement system 1B performs the same processing (concentration measurement processing) as Step S105 shown in FIG. 7. Specifically, the concentration measurer 206A of the physical quantity measurement system 1B measures the concentration x of the first gas using the measured propagation time tₓ, the first reference propagation time t_{w1}, and the second reference propagation time t_{w2}. More specifically, the concentration measurer 206A of the physical quantity measurement system 1B calculates the concentration of the first gas by dividing a first differential value by a second differential value. The first differential value is calculated by subtracting the square of the measured propagation time tₓ from the square of the second reference propagation time t_{w2}. The second differential value is calculated by subtracting the square of the first reference propagation time t_{w1} from the square of the second reference propagation time t_{w2}.

The flow rate measurer 207 of the physical quantity measurement system 1B performs the same processing (flow rate measurement processing) as Step S106 shown in FIG. 7. Specifically, the flow rate measurer 207 of the physical quantity measurement system 1B measures the flow rate Q of the gas mixtures flowing through the flow channel 101 by the Mathematical Expression 7.

Note that the physical quantity measurement system 1B performs these operations whenever measuring the concentration of the first gas.

### (3) Advantages

A physical quantity measurement system 1B according to the second embodiment includes a flow channel 101, a pair of ultrasonic transducers 11, 12, a temperature sensor 13, a pressure sensor 14, a density sensor 16, a water vapor concentration measurer 209B, a first acquirer 203, a second acquirer 204B, a third acquirer 205B, and a concentration measurer 206A. The flow channel 101 allows gas mixtures including a first gas and a second gas to flow therethrough. The pair of ultrasonic transducers 11, 12 transmit and receive an ultrasonic wave and are arranged to cause the ultrasonic wave to cross the flow of the gas mixtures along the flow channel 101. The temperature sensor 13 measures the temperature of the gas mixtures. The pressure sensor 14 measures the pressure of the gas mixtures. The density sensor 16 measures the density of the gas mixtures. The first acquirer 203 acquires a measured propagation time according to a reference temperature based on an ultrasonic wave propagation time obtained by causing the pair of ultrasonic transducers 11, 12 to transmit and receive the ultrasonic wave, the temperature measured by the temperature sensor 13, and the reference temperature. The second acquirer 204B acquires a first reference propagation time of the ultrasonic wave in a situation where at least the first gas is flowing through the flow channel 101 and the second gas is not flowing through the flow channel 101. The third acquirer 205B acquires a second reference propagation time of the ultrasonic wave in a situation where at least the second gas is flowing through the flow channel 101 and the first gas is not flowing through the flow channel 101. The concentration measurer 206A measures the concentration of the first gas using the measured propagation time, the first reference propagation time, and the second reference propagation time. The water vapor concentration measurer 209B measures a water vapor concentration using the pressure of the gas mixtures as measured by the pressure sensor 14, the density measured by the density sensor 16, and the temperature measured by the temperature sensor 13. The water vapor concentration measurer 209 obtains, as the water vapor concentration, each of a first water vapor concentration in a situation where at least the first gas is flowing through the flow channel 101 and the second gas is not flowing through the flow channel 101 and a second water vapor concentration in a situation where at least the second gas is flowing through the flow channel 101 and the first gas is not flowing through the flow channel 101. The second acquirer 204B acquires the first reference propagation time by calculating the first reference propagation time, in a situation where the first gas and the water vapor are flowing through the flow channel 101 and the second gas is not flowing through the flow channel 101, based on first gas information about the first gas, water vapor information about the water vapor, a gas constant, a gap distance between the pair of ultrasonic transducers 11, 12, the reference temperature, and the first water vapor concentration. The third acquirer 205B acquires the second reference propagation time by calculating the second reference propagation time, in a situation where the second gas and the water vapor are flowing through the flow channel 101 and the first gas is not flowing through the flow channel 101, based on second gas information about the second gas, the water vapor information, the gas constant, the gap distance between the pair of ultrasonic transducers, the reference temperature, and the second water vapor concentration. As used herein, the "first water vapor concentration" refers to the concentration of water vapor in a situation where at least the first gas is flowing through the flow channel 101 and the second gas is not flowing through the flow channel 101. The "second water vapor concentration" refers to the concentration of water vapor in a situation where at least the second gas is flowing through the flow channel 101 and the first gas is not flowing through the flow channel 101.

According to this configuration, the concentration of the first gas is measured using the measured propagation time, the first reference propagation time, and the second reference propagation time, thus allowing the concentration of a gas included in the gas mixtures to be measured by a different measuring method from the known measuring method.

In the third embodiment, as well as in the second embodiment, the gas mixtures include water vapor as a multi-atom molecule and the first and second gases which are two-atom molecules. Thus, according to the second embodiment, when the first reference propagation time and the second reference propagation time are calculated, a first mathematical expression represented by Mathematical Expression 11 and a second mathematical expression in which "M₁," "cₚ₁," and "cᵥ₁" in the Mathematical Expression 11 are replaced with "M₂," "cₚ₂," and "cᵥ₂," respectively, are used. This allows the first reference propagation time of the first gas and the second reference propagation time of the second gas to be corrected according to the concentration of the water vapor.

Optionally, at least one of the third, fourth, and fifth variations of the first embodiment is applicable to the third embodiment. Also, at least one of the first to third variations of the second embodiment is applicable to the third embodiment as well.

### (Other variations)

Note that the embodiment described above is only an exemplary one of various embodiments of the present disclosure and should not be construed as limiting. Rather, the exemplary embodiment may be readily modified in various manners depending on a design choice or any other factor without departing from the scope of the present disclosure.

Optionally, the functions of the physical quantity measurement system 1, 1A, 1B may also be implemented as a physical quantity measuring method, a computer program, or a non-transitory storage medium on which a program is stored. A physical quantity measuring method according to an aspect is used in a physical quantity measurement system 1; 1A; 1B including a flow channel 101, a pair of ultrasonic transducers 11, 12, and a temperature sensor 13. The flow channel 101 allows gas mixtures including a first gas and a second gas to flow therethrough. The pair of ultrasonic transducers 11, 12 transmit and receive an ultrasonic wave and are arranged to cause the ultrasonic wave to cross the flow of the gas mixtures along the flow channel 101. The temperature sensor 13 measures the temperature of the gas mixtures. The physical quantity measuring method includes a first acquiring step, a second acquiring step, a third acquiring step, and a concentration measuring step. The first acquiring step includes acquiring a measured propagation time according to a reference temperature based on an ultrasonic wave propagation time obtained by causing the pair of ultrasonic transducers 11, 12 to transmit and receive the ultrasonic wave, a temperature measured by the temperature sensor 13, and the reference temperature. The second acquiring step includes acquiring a first reference propagation time of the ultrasonic wave in a situation where at least the first gas is flowing through the flow channel 101 and the second gas is not flowing through the flow channel 101. The third acquiring step includes acquiring a second reference propagation time of the ultrasonic wave in a situation where at least the second gas is flowing through the flow channel 101 and the first gas is not flowing through the flow channel 101. The concentration measuring step includes measuring the concentration of the first gas using the measured propagation time, the first reference propagation time, and the second reference propagation time. A program according to another aspect causes a computer system to perform the physical quantity measuring method described above.

The physical quantity measurement system 1, 1A, 1B according to the present disclosure includes a computer system. The computer system includes a processor and a memory as principal hardware components thereof. The computer system performs the functions of the physical quantity measurement system 1, 1A, 1B according to the present disclosure by making the processor execute a program stored in the memory of the computer system. The program may be stored in advance in the memory of the computer system. Alternatively, the program may also be downloaded through a telecommunications line or be distributed after having been stored in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In the embodiment described above, the plurality of functions of the physical quantity measurement system 1, 1A, 1B are integrated together in a single housing. However, this is not an essential configuration for the physical quantity measurement system 1, 1A, 1B. Alternatively, those constituent elements of the physical quantity measurement system 1, 1A, 1B may be distributed in multiple different housings. Still alternatively, at least some functions of the physical quantity measurement system 1, 1A, 1B may be implemented as a cloud computing system as well.

### (Recapitulation)

As can be seen from the foregoing description, a physical quantity measurement system (1; 1A; 1B) according to a first aspect includes a flow channel (101), a pair of ultrasonic transducers (11, 12), a temperature sensor (13), a first acquirer (203), a second acquirer (204; 204A; 204B), a third acquirer (205; 205A; 205B), and a concentration measurer (206, 206A). The flow channel (101) allows gas mixtures including a first gas and a second gas to flow therethrough. The pair of ultrasonic transducers (11, 12) transmit and receive an ultrasonic wave and are arranged to cause the ultrasonic wave to cross a flow of the gas mixtures along the flow channel (101). The temperature sensor (13) measures the temperature of the gas mixtures. The first acquirer (203) acquires a measured propagation time according to a reference temperature based on an ultrasonic wave propagation time obtained by causing the pair of ultrasonic transducers (11, 12) to transmit and receive the ultrasonic wave, the temperature measured by the temperature sensor (13), and the reference temperature. The second acquirer (204; 204A; 204B) acquires a first reference propagation time of the ultrasonic wave in a situation where at least the first gas is flowing through the flow channel (101), and the second gas is not flowing through the flow channel (101). The third acquirer (205; 205A; 205B) acquires a second reference propagation time of the ultrasonic wave in a situation where at least the second gas is flowing through the flow channel (101), and the first gas is not flowing through the flow channel (101). The concentration measurer (206, 206A) measures the concentration of the first gas using the measured propagation time, the first reference propagation time, and the second reference propagation time.

According to this aspect, the concentration of the first gas is measured using the measured propagation time, the first reference propagation time, and the second reference propagation time, thus allowing the concentration of a gas included in the gas mixtures to be measured by a different measuring method from the known measuring method.

In a physical quantity measurement system (1) according to a second aspect, which may be implemented in conjunction with the first aspect, the second acquirer (204) acquires, from a predetermined storage area, the first reference propagation time that has been calculated in advance. The third acquirer (205) acquires, from the predetermined storage area, the second reference propagation time that has been calculated in advance.

According to this aspect, the first and second reference propagation times that have been stored in advance are used, thus allowing the concentration of the first gas to be measured easily.

In a physical quantity measurement system (1) according to a third aspect, which may be implemented in conjunction with the first aspect, the second acquirer (204) acquires the first reference propagation time by calculating the first reference propagation time according to the reference temperature based on a first propagation time which has been stored in advance, the temperature measured by the temperature sensor (13), and the reference temperature. The third acquirer (205) acquires the second reference propagation time by calculating the second reference propagation time according to the reference temperature based on a second propagation time which has been stored in advance, the temperature measured by the temperature sensor (13), and the reference temperature.

According to this aspect, the first reference propagation time is calculated based on the first measured propagation time stored in advance and the second reference propagation time is calculated based on the second propagation time stored in advance, thus allowing the first reference propagation time and the second reference propagation time to be acquired easily.

In a physical quantity measurement system (1A) according to a fourth aspect, which may be implemented in conjunction with the first aspect, the gas mixtures further include water vapor. The physical quantity measurement system (1A) further includes a pressure sensor (14), a humidity sensor (15), and a water vapor concentration measurer (209). The pressure sensor (14) measures the pressure of the gas mixtures. The humidity sensor (15) measures the humidity of the gas mixtures. The water vapor concentration measurer (209) measures a water vapor concentration using the pressure of the gas mixtures as measured by the pressure sensor (14), the humidity measured by the humidity sensor (15), and the temperature measured by the temperature sensor (13). The second acquirer (204A) acquires the first reference propagation time by calculating the first reference propagation time, in a situation where the first gas and the water vapor are flowing through the flow channel (101) and the second gas is not flowing through the flow channel (101), based on first gas information about the first gas, water vapor information about the water vapor, a gas constant, a gap distance between the pair of ultrasonic transducers (11, 12), the reference temperature, and the water vapor concentration measured by the water vapor concentration measurer (209). The third acquirer (205A) acquires the second reference propagation time by calculating the second reference propagation time, in a situation where the second gas and the water vapor are flowing through the flow channel (101) and the first gas is not flowing through the flow channel (101), based on second gas information about the second gas, the water vapor information, the gas constant, the gap distance between the pair of ultrasonic transducers (11, 12), the reference temperature, and the water vapor concentration measured by the water vapor concentration measurer (209).

This aspect allows, even when water vapor is included in the gas mixtures, the concentration of a gas included in the gas mixtures to be measured by a different measuring method from the known measuring method.

In a physical quantity measurement system (1B) according to a fifth aspect, which may be implemented in conjunction with the first aspect, the gas mixtures further include water vapor. The physical quantity measurement system (1B) further includes a pressure sensor (14), a density sensor (16), and a water vapor concentration measurer (209B). The pressure sensor (14) measures the pressure of the gas mixtures. The density sensor (16) measures the density of the gas mixtures. The water vapor concentration measurer (209B) measures a water vapor concentration using the pressure of the gas mixtures as measured by the pressure sensor (14), the density measured by the density sensor (16), and the temperature measured by the temperature sensor (13). The water vapor concentration measurer (209) obtains, as the water vapor concentration, each of a first water vapor concentration in a situation where at least the first gas is flowing through the flow channel (101) and the second gas is not flowing through the flow channel

(101) and a second water vapor concentration in a situation where at least the second gas is flowing through the flow channel (101) and the first gas is not flowing through the flow channel (101). The second acquirer (204B) acquires the first reference propagation time by calculating the first reference propagation time, in a situation where the first gas and the water vapor are flowing through the flow channel (101) and the second gas is not flowing through the flow channel (101), based on first gas information about the first gas, water vapor information about the water vapor, a gas constant, a gap distance between the pair of ultrasonic transducers, the reference temperature, and the first water vapor concentration. The third acquirer (205B) acquires the second reference propagation time by calculating the second reference propagation time, in a situation where the second gas and the water vapor are flowing through the flow channel (101) and the first gas is not flowing through the flow channel (101), based on second gas information about the second gas, the water vapor information, the gas constant, the gap distance between the pair of ultrasonic transducers, the reference temperature, and the second water vapor concentration,.

This aspect allows, even when water vapor is included in the gas mixtures, the concentration of a gas included in the gas mixtures to be measured by a different measuring method from the known measuring method.

In a physical quantity measurement system (1A; 1B) according to a sixth aspect, which may be implemented in conjunction with the fourth or fifth aspect, the first gas information includes a first molecular weight of the first gas and a first specific heat ratio of the first gas. The second gas information includes a second molecular weight of the second gas and a second specific heat ratio of the second gas. The water vapor information includes a third molecular weight of the water vapor and a third specific heat ratio of the water vapor.

According to this aspect, the first reference propagation time and the second reference propagation time are calculated using the respective molecular weights and specific heat ratios of their corresponding gases, thus allowing the first reference propagation time and the second reference propagation time to be calculated easily.

In a physical quantity measurement system (1A; 1B) according to a seventh aspect, which may be implemented in conjunction with the sixth aspect, the information about the first gas includes, as the first specific heat ratio, a molar specific heat at constant pressure of the first gas and a molar specific heat at constant volume of the first gas. The information about the second gas includes, as the second specific heat ratio, a molar specific heat at constant pressure of the second gas and a molar specific heat at constant volume of the second gas. The information about the water vapor includes, as the third specific heat ratio, a molar specific heat at constant pressure of the water vapor and a molar specific heat at constant volume of the water vapor.

According to this aspect, the first reference propagation time and the second reference propagation time are calculated using the respective molecular weights, the molar heat capacities at constant pressure, and the molar specific heat at constant volume of their corresponding gases, thus allowing the first reference propagation time and the second reference propagation time to be calculated easily.

In a physical quantity measurement system (1A) according to an eighth aspect, which may be implemented in conjunction with the first aspect, the gas mixtures further include water vapor. The physical quantity measurement system (1A) further includes a pressure sensor (14), a humidity sensor (15), and a water vapor concentration measurer (209). The pressure sensor (14) measures the pressure of the gas mixtures. The humidity sensor (15) measures the humidity of the gas mixtures. The water vapor concentration measurer (209) measures a water vapor concentration using the pressure of the gas mixtures as measured by the pressure sensor (14), the humidity measured by the humidity sensor (15), and the temperature measured by the temperature sensor (13). The second acquirer (204A) acquires the first reference propagation time by performing, on a first propagation time which has been stored in advance, a temperature conversion based on the temperature measured by the temperature sensor (13) when the first propagation time is measured and the reference temperature and a humidity conversion based on the water vapor concentration measured by the water vapor concentration measurer (209). The third acquirer (205A) acquires the second reference propagation time by performing, on a second propagation time which has been stored in advance, a temperature conversion based on the temperature measured by the temperature sensor (13) when the second propagation time is measured and the reference temperature and a humidity conversion based on the water vapor concentration measured by the water vapor concentration measurer (209).

According to this aspect, the first reference propagation time is calculated based on the first propagation time stored in advance and the second reference propagation time is calculated based on the second propagation time stored in advance, thus allowing the first reference propagation time and the second reference propagation time to be acquired easily.

In a physical quantity measurement system (1B) according to a ninth aspect, which may be implemented in conjunction with the first aspect, the gas mixtures further include water vapor. The physical quantity measurement system (1B) further includes a pressure sensor (14), a density sensor (16), and a water vapor concentration measurer (209B). The pressure sensor (14) measures the pressure of the gas mixtures. The density sensor (16) measures the density of the gas mixtures. The water vapor concentration measurer (209B) measures a water vapor concentration using the pressure of the gas mixtures as measured by the pressure sensor (14), the density measured by the density sensor (16), and the temperature measured by the temperature sensor (13). The water vapor concentration measurer (209B) obtains, as the water vapor concentration, each of a first water vapor concentration in a situation where at least the first gas is flowing through the flow channel (101) and the second gas is not flowing through the flow channel

(101) and a second water vapor concentration in a situation where at least the second gas is flowing through the flow channel (101) and the first gas is not flowing through the flow channel (101). The second acquirer (204B) acquires the first reference propagation time by performing, on a first propagation time which has been stored in advance, a temperature conversion based on the temperature measured by the temperature sensor (13) when the first propagation time is measured and the reference temperature and a humidity conversion based on the first water vapor concentration. The third acquirer (205B) acquires the second reference propagation time by performing, on a second propagation time which has been stored in advance, a temperature conversion based on the temperature measured by the temperature sensor (13) when the second propagation time is measured and the reference temperature and a humidity conversion based on the second water vapor concentration.

According to this aspect, the first reference propagation time is calculated based on the first propagation time stored in advance and the second reference propagation time is calculated based on the second propagation time stored in advance, thus allowing the first reference propagation time and the second reference propagation time to be acquired easily.

In a physical quantity measurement system (1; 1A; 1B) according to a tenth aspect, which may be implemented in conjunction with any one of the first to ninth aspects, the concentration measurer (206, 206A) calculates the concentration of the first gas by dividing a first differential value by a second differential value. The first differential value is calculated by subtracting the square of the measured propagation time from the square of the second reference propagation time. The second differential value is calculated by subtracting the square of the first reference propagation time from the square of the second reference propagation time.

This aspect allows the concentration of the first gas to be calculated by using a mathematical expression (such as Mathematical Expression 6 or Mathematical Expression 12) that uses the measured propagation time, the first reference propagation time, and the second reference propagation time, thus eliminating the need to calculate the concentration of the first gas using a complicated mathematical expression. Consequently, this aspect may lighten the processing load on the physical quantity measurement system (1, 1A).

In a physical quantity measurement system (1; 1A; 1B) according to an eleventh aspect, which may be implemented in conjunction with any one of the first to tenth aspects, the first gas and the second gas both have an identical molecular structure.

This aspect allows the concentration of any one of the first and second gases having an identical molecular structure to be measured.

A physical quantity measurement system (1; 1A; 1B) according to a twelfth aspect, which may be implemented in conjunction with any one of the first to eleventh aspects, includes a plurality of the temperature sensors (13). The temperature of the gas mixtures is an average value of temperatures respectively measured by the plurality of the temperature sensors (13).

This aspect allows the temperature of the gas mixtures to be measured more accurately.

### Reference Signs List

- 1, 1A, 1B: Physical Quantity Measurement System
- 11: Ultrasonic Transducer (First Ultrasonic Transducer)
- 12: Ultrasonic Transducer (Second Ultrasonic Transducer)
- 13: Temperature Sensor
- 14: Pressure Sensor
- 15: Humidity Sensor
- 16: Density Sensor
- 101: Flow Channel
- 203: First Acquirer
- 204, 204A, 204B: Second Acquirer
- 205, 205A, 205B: Third Acquirer
- 206, 206A: Concentration Measurer
- 209, 209B: Water Vapor Concentration Measurer

## Claims

1. A physical quantity measurement system comprising:
a flow channel, through which gas mixtures including a first gas and a second gas flow;
a pair of ultrasonic transducers configured to transmit and receive an ultrasonic wave and arranged to cause the ultrasonic wave to cross a flow of the gas mixtures along the flow channel;
a temperature sensor configured to measure a temperature of the gas mixtures;
a first acquirer configured to acquire a measured propagation time according to a reference temperature based on an ultrasonic wave propagation time obtained by causing the pair of ultrasonic transducers to transmit and receive the ultrasonic wave, the temperature measured by the temperature sensor, and the reference temperature;
a second acquirer configured to acquire a first reference propagation time of the ultrasonic wave in a situation where at least the first gas is flowing through the flow channel and the second gas is not flowing through the flow channel;
a third acquirer configured to acquire a second reference propagation time of the ultrasonic wave in a situation where at least the second gas is flowing through the flow channel and the first gas is not flowing through the flow channel; and
a concentration measurer configured to measure a concentration of the first gas using the measured propagation time, the first reference propagation time, and the second reference propagation time.

2. The physical quantity measurement system of claim 1, wherein
the second acquirer is configured to acquire, from a predetermined storage area, the first reference propagation time that has been calculated in advance, and
the third acquirer is configured to acquire, from the predetermined storage area, the second reference propagation time that has been calculated in advance.

3. The physical quantity measurement system of claim 1, wherein
the second acquirer is configured to acquire the first reference propagation time by calculating the first reference propagation time according to the reference temperature based on a first propagation time which has been stored in advance, the temperature measured by the temperature sensor when the first propagation time is measured, and the reference temperature, and
the third acquirer is configured to acquire the second reference propagation time by calculating the second reference propagation time according to the reference temperature based on a second propagation time which has been stored in advance, the temperature measured by the temperature sensor, and the reference temperature.

4. The physical quantity measurement system of claim 1, wherein
the gas mixtures further include water vapor,
the physical quantity measurement system further includes:
a pressure sensor configured to measure a pressure of the gas mixtures;
a humidity sensor configured to measure a humidity of the gas mixtures; and
a water vapor concentration measurer configured to measure a water vapor concentration using the pressure of the gas mixtures as measured by the pressure sensor, the humidity measured by the humidity sensor, and the temperature measured by the temperature sensor,
the second acquirer is configured to acquire the first reference propagation time by calculating the first reference propagation time, in a situation where the first gas and the water vapor are flowing through the flow channel and the second gas is not flowing through the flow channel, based on first gas information about the first gas, water vapor information about the water vapor, a gas constant, a gap distance between the pair of ultrasonic transducers, the reference temperature, and the water vapor concentration measured by the water vapor concentration measurer, and
the third acquirer is configured to acquire the second reference propagation time by calculating the second reference propagation time, in a situation where the second gas and the water vapor are flowing through the flow channel and the first gas is not flowing through the flow channel, based on second gas information about the second gas, the water vapor information, the gas constant, the gap distance between the pair of ultrasonic transducers, the reference temperature, and the water vapor concentration measured by the water vapor concentration measurer.

5. The physical quantity measurement system of claim 1, wherein
the gas mixtures further include water vapor,
the physical quantity measurement system further includes:
a pressure sensor configured to measure a pressure of the gas mixtures;
a density sensor configured to measure a density of the gas mixtures; and
a water vapor concentration measurer configured to measure a water vapor concentration using the pressure of the gas mixtures as measured by the pressure sensor, the density measured by the density sensor, and the temperature measured by the temperature sensor,
the water vapor concentration measurer being configured to obtain, as the water vapor concentration, each of a first water vapor concentration in a situation where at least the first gas is flowing through the flow channel and the second gas is not flowing through the flow channel and a second water vapor concentration in a situation where at least the second gas is flowing through the flow channel and the first gas is not flowing through the flow channel,
the second acquirer is configured to acquire the first reference propagation time by calculating the first reference propagation time, in a situation where the first gas and the water vapor are flowing through the flow channel and the second gas is not flowing through the flow channel, based on first gas information about the first gas, water vapor information about the water vapor, a gas constant, a gap distance between the pair of ultrasonic transducers, the reference temperature, and the first water vapor concentration, and
the third acquirer is configured to acquire the second reference propagation time by calculating the second reference propagation time, in a situation where the second gas and the water vapor are flowing through the flow channel and the first gas is not flowing through the flow channel, based on second gas information about the second gas, the water vapor information, the gas constant, the gap distance between the pair of ultrasonic transducers, the reference temperature, and the second water vapor concentration.

6. The physical quantity measurement system of claim 4 or 5, wherein
the first gas information includes a first molecular weight of the first gas and a first specific heat ratio of the first gas,
the second gas information includes a second molecular weight of the second gas and a second specific heat ratio of the second gas, and
the water vapor information includes a third molecular weight of the water vapor and a third specific heat ratio of the water vapor.

7. The physical quantity measurement system of claim 6, wherein
the information about the first gas includes, as the first specific heat ratio, a molar specific heat at constant pressure of the first gas and a molar specific heat at constant volume of the first gas,
the information about the second gas includes, as the second specific heat ratio, a molar specific heat at constant pressure of the second gas and a molar specific heat at constant volume of the second gas, and
information about the water vapor includes, as the third specific heat ratio, a molar specific heat at constant pressure of the water vapor and a molar specific heat at constant volume of the water vapor.

8. The physical quantity measurement system of claim 1, wherein
the gas mixtures further include water vapor,
the physical quantity measurement system further includes:
a pressure sensor configured to measure a pressure of the gas mixtures;
a humidity sensor configured to measure a humidity of the gas mixtures; and
a water vapor concentration measurer configured to measure a water vapor concentration using the pressure of the gas mixtures as measured by the pressure sensor, the humidity measured by the humidity sensor, and the temperature measured by the temperature sensor,
the second acquirer is configured to acquire the first reference propagation time by performing a temperature conversion and a humidity conversion on a first propagation time which has been stored in advance, the temperature conversion being performed based on the temperature measured by the temperature sensor when the first propagation time is measured and the reference temperature, the humidity conversion being performed based on the water vapor concentration measured by the water vapor concentration measurer, and
the third acquirer is configured to acquire the second reference propagation time by performing a temperature conversion and a humidity conversion on a second propagation time which has been stored in advance, the temperature conversion being performed based on the temperature measured by the temperature sensor when the second propagation time is measured and the reference temperature, the humidity conversion being performed based on the water vapor concentration measured by the water vapor concentration measurer.

9. The physical quantity measurement system of claim 1, wherein
the gas mixtures further include water vapor,
the physical quantity measurement system further includes:
a pressure sensor configured to measure a pressure of the gas mixtures;
a density sensor configured to measure a density of the gas mixtures; and
a water vapor concentration measurer configured to measure a water vapor concentration using the pressure of the gas mixtures as measured by the pressure sensor, the density measured by the density sensor, and the temperature measured by the temperature sensor,
the water vapor concentration measurer being configured to obtain, as the water vapor concentration, each of a first water vapor concentration in a situation where at least the first gas is flowing through the flow channel and the second gas is not flowing through the flow channel and a second water vapor concentration in a situation where at least the second gas is flowing through the flow channel and the first gas is not flowing through the flow channel,
the second acquirer is configured to acquire the first reference propagation time by performing a temperature conversion and a humidity conversion on a first propagation time which has been stored in advance, the temperature conversion being performed based on the temperature measured by the temperature sensor when the first propagation time is measured and the reference temperature, the humidity conversion being performed based on the first water vapor concentration, and
the third acquirer is configured to acquire the second reference propagation time by performing a temperature conversion and a humidity conversion on a second propagation time which has been stored in advance, the temperature conversion being performed based on the temperature measured by the temperature sensor when the second propagation time is measured and the reference temperature, the humidity conversion being performed based on the second water vapor concentration.

10. The physical quantity measurement system of any one of claims 1 to 9, wherein
the concentration measurer is configured to calculate the concentration of the first gas by dividing a first differential value by a second differential value, the first differential value being calculated by subtracting a square of the measured propagation time from a square of the second reference propagation time, the second differential value being calculated by subtracting a square of the first reference propagation time from a square of the second reference propagation time.

11. The physical quantity measurement system of any one of claims 1 to 10, wherein
the first gas and the second gas both have an identical molecular structure.

12. The physical quantity measurement system of any one of claims 1 to 11, comprising a plurality of the temperature sensors, wherein
the temperature of the gas mixtures is an average value of temperatures respectively measured by the plurality of the temperature sensors.
